(19) **Europäisches Patentamt**

**European Patent Office**

**Office européen des brevets**

(11) **EP 1 385 889 B1**

(12) **EUROPEAN PATENT SPECIFICATION**

(45) Date of publication and mention
of the grant of the patent:
**28.06.2006 Bulletin 2006/26**

(51) Int Cl.:
**C08F 2/54** (2006.01)     **B05D 3/06** (2006.01)
**C08F 20/18** (2006.01)

(21) Application number: **02769643.4**

(22) Date of filing: **22.02.2002**

(86) International application number:
**PCT/US2002/005475**

(87) International publication number:
**WO 2002/092639 (21.11.2002 Gazette 2002/47)**

(54) **PULSED ELECTRON BEAM POLYMERIZATION**

POLYMERISATION MIT GEPULSTEM ELEKTRONENSTRAHL

POLYMERISATION D'UN FAISCEAU ELECTRONIQUE A IMPULSIONS

(84) Designated Contracting States:
**AT BE CH CY DE DK ES FI FR GB GR IE IT LI LU MC NL PT SE TR**

(30) Priority: **11.05.2001 US 853217**

(43) Date of publication of application:
**04.02.2004 Bulletin 2004/06**

(73) Proprietor: **3M Innovative Properties Company
St. Paul, MN 55133-3427 (US)**

(72) Inventors:
• **WEISS, Douglas E.
Saint Paul, MN 55133-3427 (US)**
• **DUNN, Douglas S.
Saint Paul, MN 55133-3427 (US)**
• **SCHLEMMER, Roy G.
Saint Paul, MN 55133-3427 (US)**

(74) Representative: **Hilleringmann, Jochen et al
Patentanwälte
Von Kreisler-Selting-Werner,
Bahnhofsvorplatz 1 (Deichmannhaus am Dom)
50667 Köln (DE)**

(56) References cited:
WO-A-00/04055          WO-A-99/52650
JP-A- 59 151 100        US-A- 3 535 148

• BOTMAN J I M ET AL: "A linear accelerator as a tool for investigations into free radical polymerization kinetics and mechanisms by means of pulsed electron beam polymerization" , NUCLEAR INSTRUMENTS & METHODS IN PHYSICS RESEARCH, SECTION - B: BEAM INTERACTIONS WITH MATERIALS AND ATOMS, NORTH-HOLLAND PUBLISHING COMPANY. AMSTERDAM, NL, VOL. 139, NR. 1-4, PAGE(S) 490-494 XP004148775 ISSN: 0168-583X whole document
• A. M. VAN HERK ET AL.: "Pulsed Electron Beam Polymerization of Styrene in Latex Particles" MACROMOLECULES, vol. 29, 15 December 1995 (1995-12-15), pages 1027-1030, XP002205481
• TAKACS E ET AL: "Kinetic study on the radiation-induced polymerization of HDDA and HDDMA" , NUCLEAR INSTRUMENTS & METHODS IN PHYSICS RESEARCH, SECTION - B: BEAM INTERACTIONS WITH MATERIALS AND ATOMS, NORTH-HOLLAND PUBLISHING COMPANY. AMSTERDAM, NL, VOL. 131, NR. 1-4, PAGE(S) 295-299 XP004100533 ISSN: 0168-583X whole document
• TAKACS E ET AL: "Pulse radiolysis studies on the polymerization of acrylates and methacrylates" RADIATION PHYSICS AND CHEMISTRY, ELSEVIER SCIENCE PUBLISHERS BV., AMSTERDAM, NL, vol. 47, no. 3, 1 March 1996 (1996-03-01), pages 441-444, XP004051083 ISSN: 0969-806X

**EP 1 385 889 B1**

## Description

### FIELD OF THE INVENTION

This invention relates generally to a method of polymerizing monomers and/or oligomers. The invention more particularly relates to a method of polymerization of monomers and/or oligomers using pulses of accelerated electrons from an electron beam source.

### BACKGROUND OF THE INVENTION

Polymers in general, and pressure-sensitive adhesives in particular, are increasingly being asked to meet demanding application requirements within ever tighter performance limitations and manufacturing specifications (e.g., polymerization with minimal use of environmentally damaging solvents).

For certain applications, such as pressure-sensitive adhesive applications, polymers need to exhibit the high tensile strength and elongation properties attainable only with high molecular weight lengths between crosslinks. Polymers having high molecular weight lengths between crosslinks also provide the necessary balancing of viscous and elastic properties required for a pressure-sensitive adhesive. In general, the adhesion, cohesion, stretchiness, and elasticity of a pressure-sensitive adhesive are dictated by the attributes of the polymer used in the composition.

Other polymers may be used as coatings, for example. Coatings are applied to substrates to improve physical appearance and protect such substrates from physical damage like scratches, abrading and the like. Requirements of such coatings are not, however, as demanding in many cases as for pressure-sensitive adhesives.

In general, polymerization can be achieved by a number of methods including radiation and thermal energy in solution or in bulk (neat). UV and thermal methods require a catalyst or initiator while ionizing forms of radiation do not. Most methods of polymerization are free radical in nature and proceed in a homogenous fashion and are described by general kinetic theory. In special cases, heterogeneous polymerization may proceed if isolation of local reaction sites is achieved. This greatly increases the yield and molecular weight of the polymer because free-radical termination has been minimized. Three known methods of achieving heterogeneous polymerization are: (1) emulsion; (2) solid phase catalysis; and (3) precipitating conditions. All three of these methods involve phase separation to maintain the heterogeneous conditions.

Forms of radiation, such as gamma rays and ultraviolet light, can be used to make high molecular weight polymers having a low Tg, and pressure-sensitive adhesives requiring high shear strength and high peel adhesion. With gamma rays, emulsions (pressure-sensitive adhesive, vinyl acetate etc.) or hot melts can be made, subsequently coated, and, optionally, crosslinked to achieve high gel content for final properties. UV light requires that a crosslinker be added in order to achieve sufficient gel content necessary for high shear. These forms of radiation are generally applied in low doses. Although high molecular weight distribution between crosslinks can be achieved by these two methods, these forms are not quick and efficient because they require lower dose rates, and thereby longer durations of continuous exposure to irradiation, and optional further steps or additives to achieve a gelled network in finished form.

Gamma irradiation may be useful for polymerizing polymers in bulk and batch processes. However, it is generally too slow for use in a continuous, on-web process. In addition, the molecular weight may have to be kept low to enable the coating step (i.e. hot melt). This may require an additional step to subsequently raise the molecular weight such as by crosslinking with e-beam or UV. Still, the presence of low molecular weight material may limit the shear adhesion even after crosslinking.

Ultraviolet light is useful for polymerizing various polymers without the use of a solvent. It has been used to make pressure sensitive adhesives, and coatings, for examples. However, ultraviolet polymerization has several significant limitations. First, ultraviolet light polymerization occurs only in connection with monomeric species that absorb ultraviolet light and decompose. Since most monomers do not absorb sufficient ultraviolet light to initiate polymerization, photoinitiators are usually added to the monomers. Photoinitiators are materials that decompose into free-radicals or cations upon exposure to ultraviolet radiation. These free-radicals and/or charged molecules then initiate polymerization of the monomers. Unfortunately, photoinitiators can contribute various undesirable attributes to the resultant polymer, including yellowing of the polymer, contamination of the polymeric material with unreacted initiator and initiator fragments added to the polymer, and higher overall material costs. These contaminants may be undesirable because they are capable of initiating subsequent reactions upon exposure to ultraviolet light. The presence of such contaminants are particularly troublesome in the food and medical areas where the presence of photoinitiators is simply unacceptable due to their odor and the potential for skin irritation and toxicity. Other additives may also be needed to form a gelled network such as multifunctional acrylates or triazines, which are corrosive.

The second limitation of ultraviolet light is that only monomeric compositions which are transparent to ultraviolet light can be effectively polymerized. Compositions that are translucent or opaque to ultraviolet light will only polymerize on the surface, since ultraviolet light cannot penetrate into the bulk of the composition. Thus, the use of many desired modifiers that absorb ultraviolet light (such as carbon black, glass beads, ultraviolet light stabilizers and colorants) and various physical structures (such as foamed adhesives and suspended particles) are limited when the monomeric composition is to be polymerized by ultraviolet light.

Electron beam (e-beam) irradiation is widely used to crosslink a variety of different polymers for purposes of improving various properties such as resistance to melting, tensile strength and shear strength. E-beam irradiation is also used to polymerize multifunctional oligomers and/or multifunctional monomers to make hard, scratch-resistant coatings. Electron beams operate by bombarding molecules with electrons. These electrons displace other electrons in the bombarded molecules, thereby creating free radicals, which may react with other molecules. Electron beam radiation produces a high rate of free-radical initiation and may produce free radicals in all components of the system including the product itself as it is being formed. Wilson, *Radiation Chemistry of Monomers, Polymers, and Plastics,* chapter 11, p. 375, New York, 1974. Because of this indiscriminate production of free radicals and high dose rates (radical flux), electron beam radiation has generally not been used for polymerization processes, but instead has been restricted to crosslinking processes.

E-beam polymerization overcomes a number of the limitations inherent with gamma ray and ultraviolet light polymerization. However, the use of e-beam polymerization has been limited due to the inherent tendency of e-beam radiation to produce short-chain, branched, highly crosslinked polymeric structures. This phenomenon is exhibited by the tendency for e-beam polymerized pressure-sensitive adhesives to exhibit pop-off failures, frequently accompanied by low peel strength in pressure sensitive adhesives. A second limitation observed with typical e-beam polymerization techniques is a substantial concentration of residuals (*e.g.,* unreacted monomers) remaining in the resultant polymerized product (*i.e.,* low conversion) and low molecular weight (non-reactive) polymer in the ungelled (sol) portion which may further contribute to pop-off failure and light residue on the substrate surface (i.e. ghosting). In addition, the overall residence time to complete the polymerization, without resorting to greatly excessive dose and more highly crosslinked polymer, is significant. For this reason, the process of making a pressure sensitive adhesive, for example, with a conventional, curtain-style, continuous e-beam is considered to be slow.

## SUMMARY OF THE INVENTION

The inventors recognized that a need exists for a method that is quick and efficient in effecting the high-conversion radiation polymerization of polymers, and which is effective for producing highly gelled polymers of adequate chain lengths between crosslinks over a broad range of coated thickness and with very little low molecular weight material present. E-beam has been used mainly for crosslinking purposes. In an earlier patent application, a method of polymerizing monomers and/or oligomers to make pressure sensitive adhesives using a continuous beam of accelerated electrons at low temperature was disclosed. *See* WO-A-00/004055. The inventors recognized the need for an even more efficient polymerization method.

The present invention provides for a method for polymerizing a pressure-sensitive adhesive article as defined in claim 1. Additional embodiments of the present invention are referred to in the dependent claims.

Embodiments of the present invention use pulses of accelerated electrons to polymerize monomers and/or oligomers. There are distinct advantages to using pulses of electrons rather than a continuous beam, which are discussed below.

The present inventive method takes advantage of the special kinetic properties that result from pulsing the electron beam. As a result, the method enables continuous production of articles using the process, such as pressure-sensitive adhesive articles. The method enables the polymerizable composition to be polymerized in a single phase and on-web. An article is made while it is being polymerized, which is a very efficient, one-step process.

Embodiments of the present inventive method have advantages over the other types of irradiation, as well as a continuous e-beam. One such advantage of the present invention is that it is effective for quickly and efficiently producing polymers having a sufficient crosslink density. One use for such a crosslinked polymer is in a pressure-sensitive adhesive composition requiring superior peel adhesion and superior shear strength and high conversion, which does not require the use of solvents or chemical initiators for the conversion process to take place.

A second advantage of at least one embodiment of the present inventive method is that the deposition of energy by the pulses of accelerated electrons, under certain conditions (i.e. low dose/pulse and high pulse rate), is heterogeneous in nature. Heterogeneous polymerization (polymerization in heterogeneous mode or fashion) is when free radicals are localized (non-random) by any of several mechanisms involving different states of matter or phase separation within a given state of matter in order to restrict their diffusion. This has the effect of limiting termination reactions. In heterogeneous polymerization, the diffusion of monomer to the free radicals is not restricted.

Termination results from a propagating free radical being joined by another free radical, rather than a monomer, to effectively end propagation. The two unpaired electrons combine to form a single bond.

The ionization events, in heterogeneous polymerization, are distributed at some distance from one another as isolated sites where free radicals emerge as surviving species before diffusion causes the system to become homogeneously distributed. This effectively allows polymerization to take place and reduces termination because the free radicals are separated from each other spatially for a short time period. The reduction in termination results in higher conversion values for the polymerization method.

Homogeneous polymerization (or polymerization in a homogeneous fashion or mode), on the other hand, is polymerization in which the free radicals are distributed randomly in a single-phase medium and are free to diffuse. The termination that results is governed by the thermodynamics of movement (which is continuous zigzag motion of the molecules caused by impact with other molecules of the liquid). Termination effectively occurs more easily and quickly than in heterogeneous polymerization.

Another advantage of at least one embodiment of the present invention is that the residence time needed to produce an article using the method is shorter, because of reduced terminations, than using the other methods of irradiation or a continuous beam of electrons. This means that more practical throughput rates can be achieved.

A further advantage of at least one embodiment of the present invention is that pulsing the electron beam decreases the high voltage hold-off (i.e. using more robust insulation around the cathode and high voltage components) required by continuous e-beams to prevent internal arching. Therefore, there may be the opportunity to lower capital cost to build equipment by using less expensive components and more compact vessels.

An additional advantage is the tolerance for longer or wider pulse duration or pulse width than is typical of thyratron types of pulse forming equipment (1-2 microseconds). The tolerance of pulse durations of about 1-250 microseconds allows latitude in the choice of pulse-forming networks which include less expensive, more conventional capacitor-discharge types. Also, there is less thermal shock experienced by the beam window at the wider pulse-width.

Another advantage over the UV-based process is that in this process clean and clear adhesives can be made without the photoinitiators or triazine residues. Also, highly pigmented adhesives can be produced that would not be able to be produced by UV because they are opaque to UV light.

Yet another advantage of the present inventive method is that, because the process is so fast, it allows for polymerization of materials with short stability times. For instance, polymerization of a mixture of two immiscible materials is possible. The mixture can be polymerized after it has been mixed and before it has a chance to phase separate. In addition, polymerization of thin layers of materials that evaporate quickly after being coated is also possible. Further, because temperature control can be practically maintained throughout the short time period necessary for polymerization, it is possible to polymerize biphase compositions with novel morphology or topology.

An additional advantage of the present invention is that there are fewer contaminants than with other processes. In other processes for making a pressure-sensitive adhesive, for example, catalysts or initiators are used to make the adhesive. The initiator, or parts of it, remains in the adhesive that is formed using the initiator. It is important, in the electronics industry, for example, to keep these contaminants to a minimum. When adhesives, for example, are used in or near electronics, any contaminants in the adhesives or out-gas may cause undesirable reactions in the electronics, such as corrosion. The pulsed e-beam process does not use initiators, and, therefore, eliminates this problem.

One more advantage of the present inventive method is that it is versatile. For example, the method may be used to polymerize solventless blends as well as emulsions, which may be coated on-web and then polymerized.

Further features and advantages are disclosed in the embodiments that follow.

As utilized herein, including the claims, the term "syrup" is utilized in accordance with its conventional definition to reference compositions of one or more polymerizable monomers, oligomers and/or polymers that have coatable viscosities and do not exhibit any appreciable pressure-sensitive adhesive characteristics until cured. Such syrups typically achieve a coatable viscosity through partial polymerization or through the addition of organic or inorganic thickening agents.

As utilized herein, including the claims, the term "conversion" is utilized in accordance with its conventional industry meaning to reference the non-volatile, reacted portion of the polymerized adhesive mass (both gelled and extractable) and does not remain as a monomeric residue, moisture or decomposition fragments, and/or unreactive contaminant.

As utilized herein, including the claims, the term "wt%" is utilized in accordance with its conventional industry meaning and refers to an amount based upon the total weight of solids in the referenced composition.

As utilized herein, including the claims, the term "gel" refers to the non-extractable component in the converted material that constitutes an "infinite" network (one molecule).

As utilized herein, including the claims, the term "single phase" means that all of the components of the system or composition (i.e. monomers, oligomers, additives, solvent, etc.) exist in a single physical phase (i.e. gas, liquid or solid) and are not partitioned in any way from one another, and hence they are miscible.

As utilized herein, the term "conversion dose" means the dose necessary to reach a certain percentage of conversion (i.e. about 97%) from monomers to polymers during a polymerization process.

## BRIEF DESCRIPTION OF THE FIGURES

The invention may be more completely understood in consideration of the following detailed description of various embodiments of the invention in connection with the accompanying figures, in which:

Figure 1 is a graph showing the kinetic simulation of polymerization using pulses of accelerated electrons, including concentrations of free radicals and monomers versus time;
Figure 2 is a graph showing a simulation of an embodiment of the present inventive method, including free radical concentration versus pulses at three different pulse rates;
Figure 3 is a graph of the conversion dose versus the dose/pulse using three different pulse rates;
Figure 4 is a graph of the conversion dose versus the pulse rate for several different dose/pulse levels from two different e-beam machines (NSRC and PYXIS);
Figure 5 is a graph of residence time versus dose rate for several different dose/pulse levels;
Figure 6 is a graph showing the percentages of gel and swell versus the percentage of residuals in the composition at different stages of polymerization for the method using pulses of accelerated electrons and the method using a continuous beam of electrons; and
Figure 7 is a graph including the percentage of residual monomers at different stages of polymerization versus the dose for both 0 degrees Celsius and 25 degrees Celsius polymerization temperatures using the method of pulsing the accelerated electrons.

## DETAILED DESCRIPTION OF THE INVENTION

The present invention, in its simplest embodiment, is a polymerization method comprising: providing a substrate; coating at least a portion of said substrate with a polymerizable composition; providing an electron beam that is capable of producing pulses of accelerated electrons; and irradiating said polymerizable composition with said pulses of accelerated electrons to polymerize said polymerizable composition.

*FIGURES*

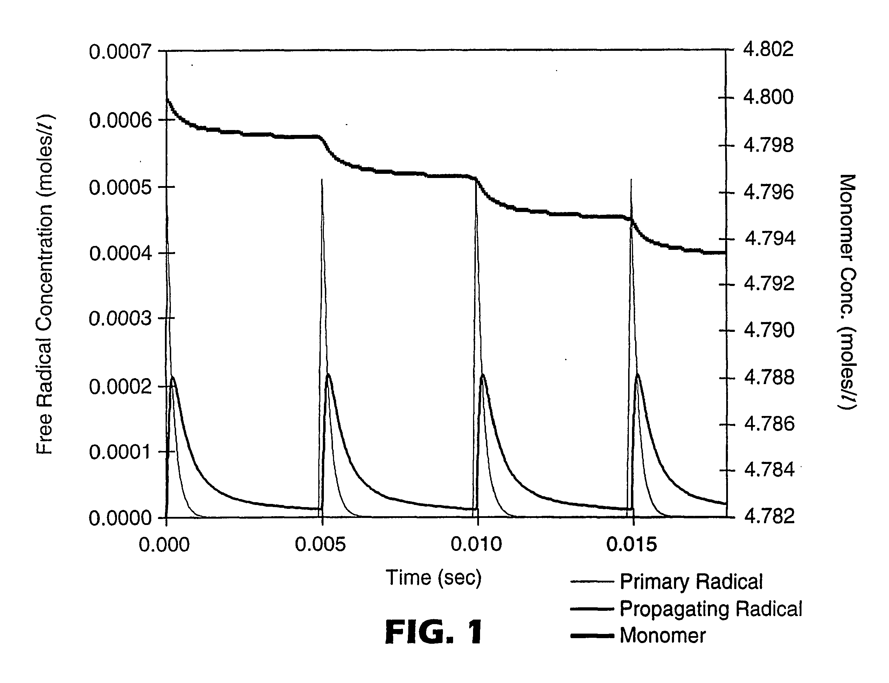

Figure 1 shows a kinetic simulation of pulsed e-beam polymerization of an embodiment of the present inventive method. As can be seen, with each pulse, which is about every .005 seconds (pulse rate of 200 pps), the free radical concentration goes up initially, nearly instantaneously. The free radicals are being produced by ionization of some monomers, which is what leads to free radical initiation of polymerization with other monomers to form polymers. This gives rise to an increase in propagating free radicals. The free radical concentration, however, drops as diffusion takes place and termination becomes dominant, until the syrup or polymerizable composition is irradiated with another pulse of an e-beam. The concentration of the monomer decreases steadily with each pulse as monomer is being consumed by polymerization and conversion increases.

In the present inventive method, and under selective conditions, the pulses of electrons are producing free radicals that are spatially (physically) isolated from one another. This allows more time for the free radicals to react with monomer and grow longer polymer chains before encountering another free radical and terminating. Because this chemistry is controlled by diffusion of reacting species, the isolation of free radicals is also assisted or improved by lowering the temperature (or otherwise raising the viscosity) of the polymerizable composition while it is being irradiated with pulses of electrons.

The initial ionizing events of the present inventive method occur during the deposition of energy by accelerated electrons and are heterogeneous in nature. They are described by a track-and-spur structure where ionization events from single accelerated electrons are distributed at some distance from one another, either as isolated or clustered sites. The energy deposited per spur (50 -100 eV) is sufficient to result in formation of several free radicals. Free radicals emerge from each track as the surviving species of the early events. Because the tracks are separated by a sufficient distance (due to low dose per pulse) there is a short time period when the free radicals can propagate with minimum contact with one another. Eventually, diffusion causes the system to become homogeneously distributed and the rate of termination then increases significantly. A low dose per pulse maintains spatial distance between the electron tracks to allow chain propagation to proceed with a minimum of chain terminations resulting from combination with free radicals formed by a different neighboring track.

Because free radical polymerization is very fast (rate constants are on the order of $10^4$ to $10^5$ 1/mol-s), it is possible to introduce successive pulses of radiation at very high rates (several kHz) and still maintain heterogeneous kinetics. As long as the dose per pulse is below the threshold where significant spatial overlap of the track-and-spur structures occurs, it is possible to take advantage of heterogeneous (localized) kinetics. It is primarily the large separation between tracks at low dose per pulse that is responsible for maintaining localized kinetics. For as long as this advantage can be maintained, an increase in dose rate (pulse rate) will simply add more radicals while the total dose required for achieving high conversion will not change significantly. The rate of polymerization will be proportional to the rate of initiation (Ri) rather than the rate of termination (Ri$^{1/2}$).

Using the present inventive method, the best results occur when a low dose per pulse is used with a high pulse rate. This seems to give the best free radical isolation.

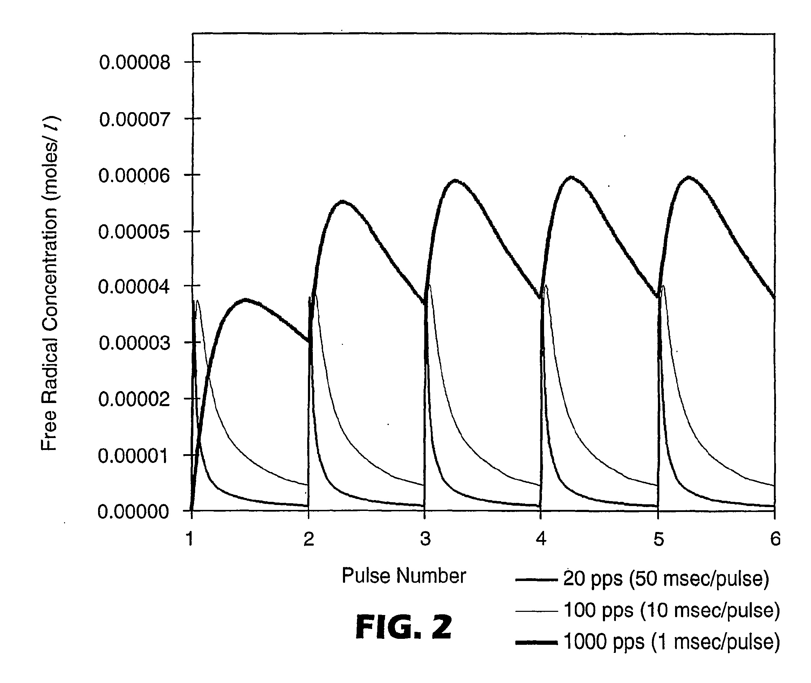

Figure 2 is a kinetic simulation of the propagating free radical concentration in an embodiment of the present inventive method. The figure shows three conditions of low, medium and high pulse rates (20 pps, 100 pps and 1000 pps, respectively). The dose rates are constant for all three conditions by adjustment of pulse duration. The high steady state concentration of propagating radicals at high pulse rate can be maintained when spatial separation of initiating radicals is sufficiently high (low dose per pulse). It is important to control the overlap in space to minimize termination and to shorten the time interval between pulses to gain efficiency. An interval of even as small as a half of a millisecond is still sufficiently long enough for free radical decay (lifetime), so as not to introduce excessive termination. Increased termination will result from temporal overlap of electron tracks. At some point, higher frequencies will overlap temporally to a sufficiently greater degree, thereby losing efficiency and converging with the kinetics of continuous polymerization.

Figure 2 also illustrates successive pulses in stop-motion, since the interval between pulses in this Figure is expressed as a fixed-width. Stop-motion is a viewing technique where the frequency of image capture matches the frequency of the event being captured to enable a freeze-frame view of a rapid event. An example of this technique would be to photograph a falling object using a strobe-flash to capture the image of the object at fixed intervals in time. Another example would be to observe a cyclical and repetitive event such as an oscillating object (electrical contact) through a revolving disk with holes in it for viewing. As the speed of the disk is varied, there will be a speed where the intermittent view through the holes matches the frequency of the oscillation and the object will appear to the viewer to be motionless.

The pulse intervals shown in Figure 2 represent different time duration but are expressed in equal segments along the abscissa (units are in pulses) in order for the viewer to compare the concentration of propagating free radicals between pulses. The figure represents a stop-motion view of individual pulses where the frequency of image capture matches the pulse interval for each case and the images are overlapped for viewing purposes on the same scale; equal spacing along the abscissa between pulses.

As can also be seen in Figure 2, as the pulse rate is increased, the heterogeneous phase of the polymerization can be seen to become more prominent. This is represented by the sharply rising concentration of propagating radicals. As the system then becomes homogeneous (due to diffusion), the rate of termination increases and the concentration of propagating free radicals decreases. As the pulse rate increases beyond 1,000 pulses per second, the intercept, with the next pulse, moves up the curve toward the peak. This would represent the point of maximum efficiency and the entire polymerization would be confined to the heterogeneous mode. A pulse rate of 2,000 pulses per second is close to the peak. At some higher pulse rate, the intercept would move into the homogeneous phase and decrease the efficiency.

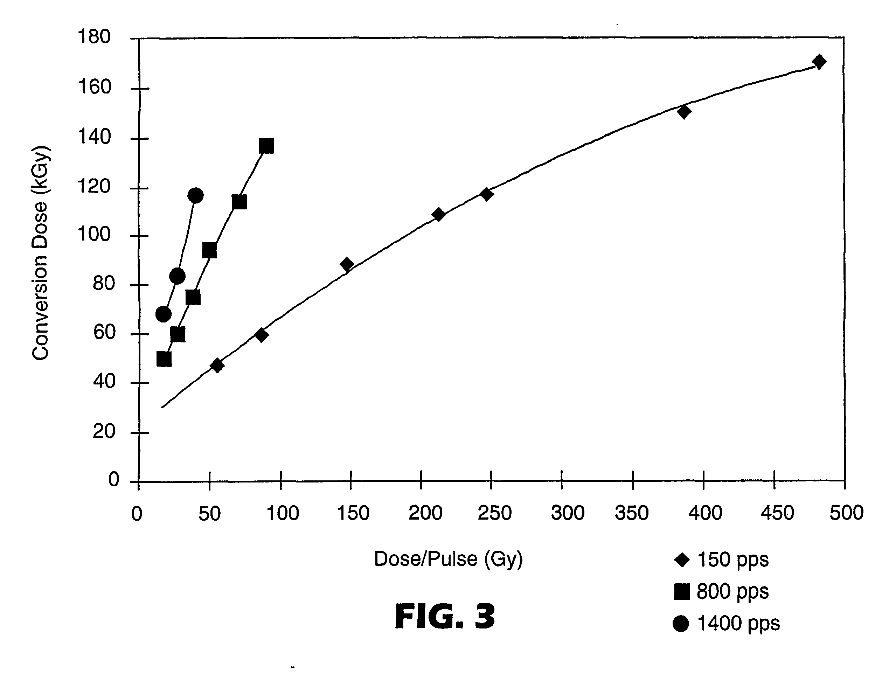

Figure 3 shows the conversion results from experiments with increasing dose per pulse at three different pulse rates (150, 800 and 1400 pulses per second (pps)). Above the threshold overlap dose per pulse, the system is dose rate sensitive. As the dose per pulse is increased, the pulse rate needs to be decreased to avoid high dose rates and allow for surviving free radicals to propagate.

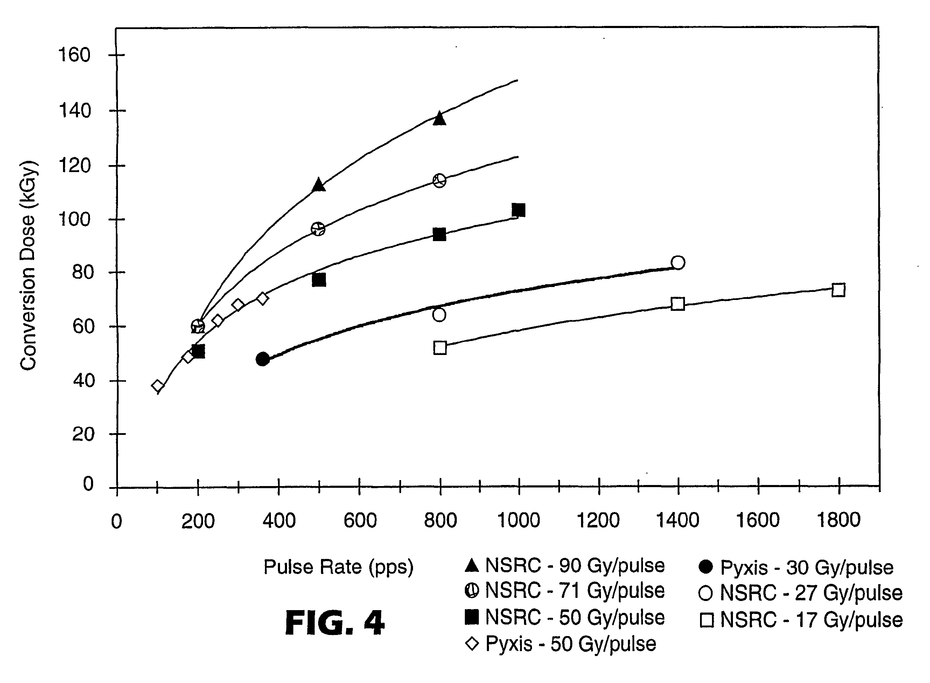

Figure 4 shows the conversion results from experiments with increasing pulse rates at different amounts of dose per pulse. As the dose per pulse amount is decreased, the curves begin to flatten out as the system becomes more dominated by heterogeneous kinetics at high pulse rates. As the dose per pulse of 15 to 25 Gray (Gy) is approached and the pulse rate is increased above 500 Hz, the total dose requirement for high conversion does not change significantly as the dose rate is increased. Below the threshold overlap dose per pulse (the dose that generates a sufficiently high enough flux of free radicals that are in close enough proximity to begin immediate reactions with one another), and above about 500 Hz, the rate of polymerization increases in direct proportion to the dose rate and the conversion dose remains nearly constant. Therefore, as can be seen in Figures 3 and 4, the best conversion results are found with low dose per pulse when a high pulse rate is used.

Figure 4 also shows that below 500 Hz, the reactions take place predominantly in the homogeneous mode because of the longer time intervals between pulses (diffusion). As the frequency of the pulses increases, while the dose per pulse stays low, the heterogeneous mode of polymerization becomes more dominant. Above 500 pulses per second, the shorter interval between pulses increasingly favors heterogeneous kinetics. Hence, the sharp initial rise in conversion dose as pulse rate increases is the result of early termination of the homogeneous kinetics. Beyond 500 pps, this progressively becomes less of a factor as heterogeneous kinetics predominate.

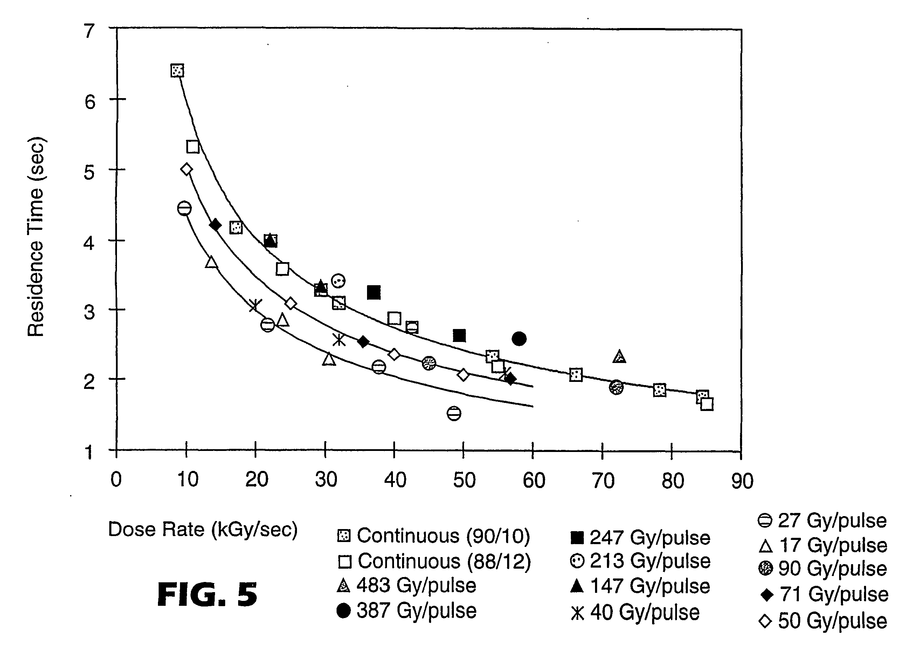

Figure 5 demonstrates the processing advantage of heterogeneous kinetics. It can be seen that using a low dose per pulse and a high pulse rate results in higher efficiency (less termination) leading to a much faster process time (less residence time). Less residence time results in a higher throughput at similar dose levels than would be achieved using a continuous electron beam. Hence, there is a savings in energy costs and equipment costs by using the pulsed e-beam. For example, at a dose rate of 40 kGy/sec and a dose of 17Gy/pulse, high conversion is achieved in just 2 seconds of residence time with a pulsed beam. The total dose requirement is 80 kGy. Based on this example, there are three scenarios possible for a continuous beam to match any of these combinations. The first scenario uses a continuous beam and 2 seconds of residence time. For the first scenario, a dose rate on the order of 70 kGy/sec is required, to result in a total dose of 140 kGy. The higher dose rate in the first scenario may cause more low molecular weight material to be formed initially, possibly leading to pop-off shear failure. In the second scenario, in order to achieve high conversion at a dose rate of 40 kGy/sec with continuous beam, a residence time of 3 seconds is required and total dose of 120 kGy is required. In both the first and second scenarios, the higher dose requirement may lead to reduced peel strength because of the more highly crosslinked structure that is formed. The higher amount of energy required in both cases may make cooling the web more difficult, requiring even more energy. In the third scenario, in order to achieve the same total dose of 80 kGy with the continuous beam, 5 seconds of residence time at a dose rate of about 17 kGy/sec is necessary. Also, a much larger beam would be required that extends in the down-web direction to provide the same throughput as an optimized pulsed beam. A larger beam would require higher capital and more energy consumption.

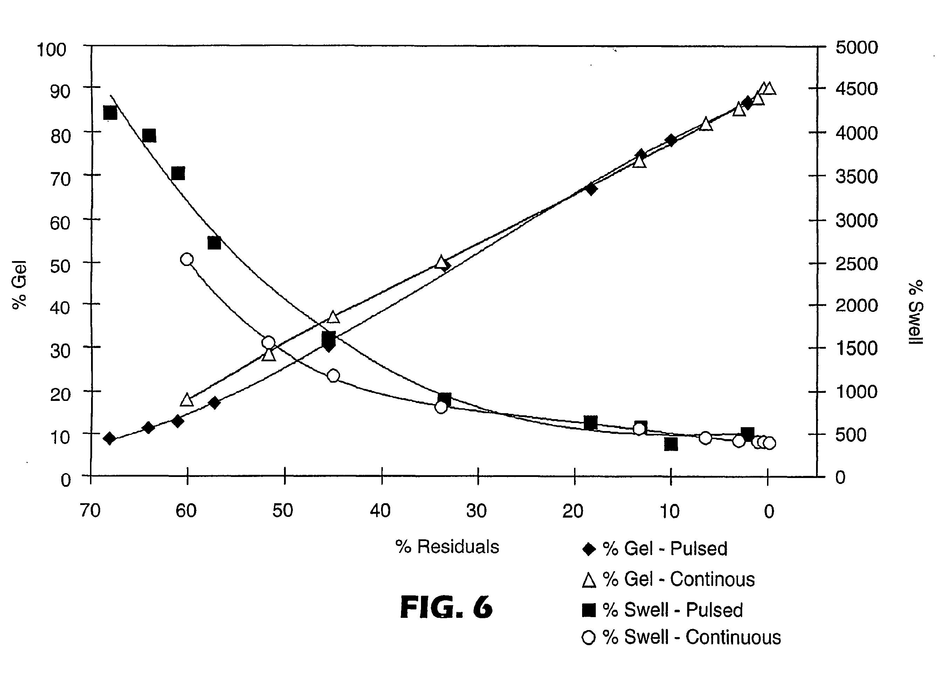

Figure 6 shows that in the early stages of conversion from monomer to polymer, the dominance of heterogeneous kinetics allows for the formation of a loosely connected gel structure, which has a higher swell and less gel content. The looser gel structure indicates that there is more chain length on the polymers between the crosslinks, which is a result of less termination, than for the homogeneous (continuous) polymerization. As the percent conversion approaches about 50-70%, the system becomes diffusion limited and grafting reactions begin to dominate. At that point in time, the polymer being formed has become a significant component of the mixture and ionization sites on the polymer become propagating radicals. This leads to branching and crosslinking reactions that begin to tie the system into a gel. As the autoacceleration continues towards full conversion, the gelled portion of the system becomes progressively larger and tighter. It is during this phase that the resulting structure of the polymer becomes larger and tighter whether the polymerization began as heterogeneous or homogeneous kinetics. Hence, the benefit of heterogeneous kinetics for the system studied may be confined mostly to the first half of the polymerization. Therefore, it may be possible for about the second half of the polymerization to be completed by a continuous, conventional e-beam at high dose rate and ambient conditions.

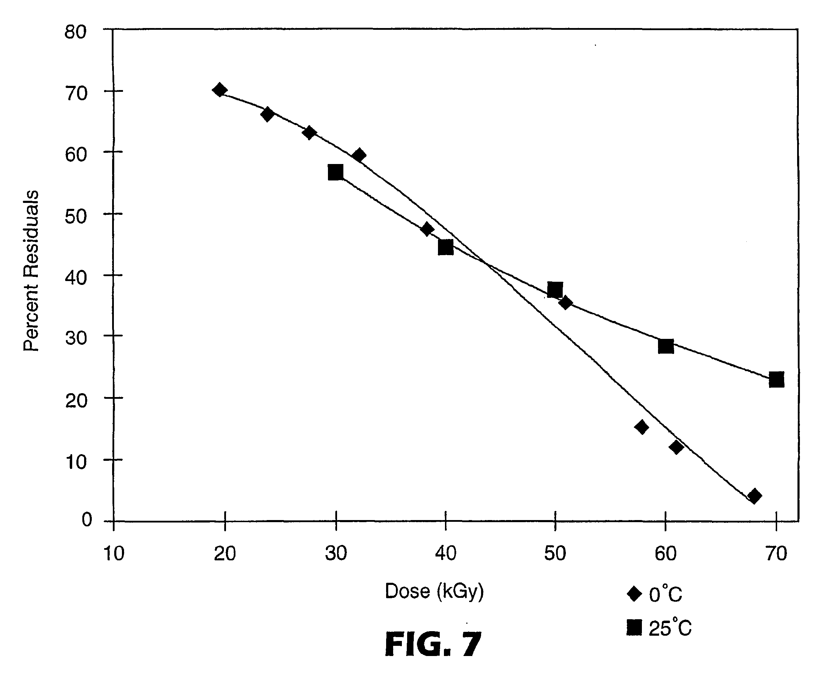

Figure 7 shows the effect of temperature control during polymerization with pulsed electron beam. The conversion, expressed in terms of percent residuals, was measured at fixed intervals of dose to show the process of the polymerization at various stages. If uncontrolled (ambient or 25°C), there is a point at about 50% conversion at which the rate of conversion appears to slow, in comparison to temperature controlled (0°C) samples, and the level of residual reduction with increasing dose appears to plateau. This is probably the result of low molecular weight material formed early in the polymerization, as a result of higher termination, that is non-reactive and undesirable in terms of physical properties. It is very difficult to incorporate this material into the gel portion of the polymer at the end stages of polymerization. The low temperature is believed to increase the viscosity of the polymerizable composition at low conversion, further limiting diffusion of the free radicals and termination reactions, which limits the amount of low molecular weight material in this stage.

Conditions that are optimum for pulsed polymerizations appear to be more dependent on temperature control than for continuous, possibly due to the higher instantaneous dose rate of a single pulse and the need to limit diffusion to prolong the heterogeneous mode.

*SUBSTRATE*

A wide variety of substrates can be used to make a pressure-sensitive adhesive article using the present inventive method, so long as the substrate is not substantially degraded by electron beam irradiation.

Suitable substrates used to make pressure-sensitive adhesives or articles using the present inventive method include metals, such as aluminum foil, copper foil, tin foil, and steel panels; plastic films, such as films of polyvinyl chloride, polyethylene, polypropylene, polyethylene terephthalate, nylon, polyesters, polystyrene, polycarbonates, polyphenylene oxides, polyimides, polyvinyl fluoride, polyvinylidene fluoride and polytetrafluoroethylene; metalized plastics; cellulosics such as paper and wood; and fabrics such as woven and non-woven cotton, nylon and wool and synthetic non-wovens.

A pressure-sensitive adhesive can be utilized in an adhesive tape, wherein the adhesive is formed on a thin, flexible backing sheet material, or in the construction of a surgical adhesive dressing, wherein the adhesive is formed on a moisture vapor transmissive backing sheet. The adhesive may also be used as a laminating binder or provided as a supported or unsupported film.

An advantage provided by effecting e-beam curing of the adhesive syrup directly upon the end-use substrate is the ability of e-beam irradiation to create reactive sites in both the adhesive syrup and the substrate so as to cause chemical bonding between the adhesive and the substrate at the interface of these two layers, thereby grafting the adhesive to the substrate and eliminating the need to prime or otherwise treat the substrate prior to coating.

Suitable substrates used to make coated articles using the present inventive method include such materials as metals, woods, plastics, or composites of different materials. The present inventive method, however, is not limited to the substrates described herein and may include the use of other materials that are also not substantially degraded by electron beam irradiation.

*COATING*

The polymerizable composition may be coated onto a substrate prior to polymerization by any conventional coating means. Suitable coating techniques include such common techniques as spray coating, curtain coating, solvent casting, latex casting, calendaring, knife coating, doctor blade coating, roller coating, two-roller coating, reverse roller coating, electrostatic coating and extrusion die coating.

It is generally desirable to polymerize the polymerizable composition directly on an end-use substrate. For example, a pressure-sensitive adhesive precursor polymerizable composition can be coated onto a substrate and then subjected to pulses ofe-beam radiation so as to form a layer of pressure-sensitive adhesive adherently bonded to a substrate.

Polymerizable composition thicknesses of from about 10 to 500 microns (0.4 to 20 mils) can be conveniently polymerized in accordance with the process described herein at voltages of up to about 300 keV (single gap). Polymerizable composition thicknesses of up to about 1,000 microns (40 mils) can be conveniently polymerized in those situations where the syrup can be irradiated on both sides. Quality control becomes a significant issue with polymerizable composition layers having a thickness of less than about 10 microns (0.4 mil) due to the potential for significant changes in the relative thickness of the layer resulting from selective evaporation. On the other hand, it becomes increasingly difficult to provide consistent levels of polymerization through the entire thickness of polymerizable composition layers which are more than about 500 microns (20 mils) thick due to the limited penetration capabilities of a low voltage e-beam of less than about 300 keV. However, pulsed systems may be capable of higher single gap voltages in a still very compact unit since they do not have to stand off the voltage continuously.

Gap voltage is the electrical potential between the ground and the cathode, which is bridged in a single gap. For DC equipment, this is practical up to a voltage of about 300 keV. Beyond 300 keV, the insulation requirements become very impractical. Higher voltages than 300 keV are generated in multiple gaps to progressively accelerate the electrons emitted from the cathode in steps in order to keep each gap at a manageable potential.

The dielectric requirement needed to insulate a high voltage potential (high voltage stand-off requirement) from ground is greater when the potential is constant than when it is very brief or intermittent. This is because the break-down of insulation properties is not instantaneous but progressive up to a point where arcing can occur (a plasma travels to ground and closes the circuit). The short pulse duration (1-2 microseconds) allows the cathode to discharge before arcing can occur, even when insulation is very modest. This is because the mechanism for discharge is faster than a plasma can close the circuit (rate of travel is a few cm per second). Even at longer pulse durations, the discharge may be faster than the factors that can cause arcing to occur in the 10-100 microsecond time frame, such as finger prints, sharp points and defects on surfaces. Thus, the insulation requirements will not be as great as those required for constant (DC) potential.

Ultimately, heat transfer problems govern the maximum thickness possible. However, a resultant high residual content can be reduced by the subsequent evaporation of residuals from the cured coating. In addition, it becomes increasingly difficult to maintain the appropriate temperature throughout the thickness of the polymerizable composition at thicknesses greater than about 500 microns (20 mils) due to the greater amount of heat generated during polymerization and the slower transfer of heat from the central portion of the polymerizable composition layer.

For pressure-sensitive adhesives, the adhesive syrup (polymerizable composition) can be conveniently coated by conventional coating techniques, such as knife coating and roll coating, at viscosities of between about 500 to 40,000 centipoise. When the resultant polymerized pressure-sensitive adhesive has a viscosity in excess of about 40,000 centipoise, the adhesive composition can be conveniently coated by extrusion or die coating techniques.

The viscosity of the polymerizable composition can be increased to allow the composition to retain a desired coating thickness prior to polymerization. Such an increase in viscosity can be achieved by any of the conventional techniques, including removal of solvent, cooling, effecting partial polymerization of the polymerizable composition, and/or adding thickeners to the polymerizable composition. However, when adding a thickener, care must be taken to ensure that the thickener is not significantly interfering with polymerization or resultant properties, and that the residence time, total dose and/or polymerization temperature are adjusted as appropriate to accommodate inclusion of the thickener. A generally preferred technique for increasing the viscosity of the polymerizable composition, for example, is to prepolymerize approximately 1 to 15 wt%, most preferably about 4 to 7 wt%, of the monomers in the polymerizable composition.

A thickener may be used in the polymerizable composition of the present inventive method. A thickener may be used with monomers, but are generally not necessary with oligomers. Thickeners can increase the viscosity of the polymerizable composition. The viscosity needs to be high enough to enable the polymerizable composition to be coatable. In addition, the relatively high viscosity may play a role in contributing to the isolation of the free radicals, thereby improving conversion and reducing termination. A viscosity in the range of about 400-25,000 centipoise is typically desired.

Suitable thickening agents are those which are soluble in the polymerizable composition, and generally include oligomeric and polymeric materials. Such materials can be selected to contribute various desired properties or characteristics to resultant article. Examples of suitable polymeric thickening agents include copolymers of ethylene and vinyl esters or ethers, poly(alkyl acrylates), poly(alkyl methacrylates), polyesters such as poly(ethylene maleate), poly(propylene fumarate), poly(propylene phthalate), and the like.

Other types of thickening agents may be used to good advantage include finely divided silica, fumed silica such as CAB-O-SIL, alumina and the like.

## POLYMERIZABLE COMPOSITION

The polymerizable composition of the present inventive method comprises at least one polymerizable monomer, at least one polymerizable oligomer, or a blend thereof. Additional optional ingredients include comonomers, crosslinking agents, free-radical yielding agents, photoinitiators, additives, thickeners and tackifiers.

### Acrylate Monomers

All acrylate monomers are useful in the present inventive method. Alkyl acrylate monomers particularly useful in this invention are those that free-radically polymerize quickly, and with which propagation reactions occur preferentially over termination or crosslinking reactions.

Such free-radically polymerizable acrylate monomers useful in the polymerizable composition to form pressure-sensitive adhesives using the present inventive method are those that have a homopolymer glass transition temperature less than about 0°C, and preferably less than about -20°C. Useful alkyl acrylate monomers are monofunctional acrylic acid esters of non-tertiary alkyl alcohols having from 8 to 13 carbon atoms in the alkyl moiety. Examples of useful alkyl acrylate monomers include, but are not limited to, n-octyl acrylate, isooctyl acrylate, 2-ethylhexyl acrylate, isononyl acrylate, n-decyl acrylate, n-dodecyl acrylate, tridecyl acrylate and mixtures thereof.

Other monomers that may be used to form coatings using the present inventive method, include, but are not limited to, methyl methacrylate, isobornyl acrylate, tripropyleneglycol diacrylate, pentaerythritol tri(and tetra)acrylate, hydantoin hexacrylate, trimethylolpropylenetriacrylate, and multifunctional acrylates in general. These monomers have higher glass transition temperatures than those used for pressure-sensitive adhesives. The glass transition temperatures of such monomers are generally above ambient temperature. Careful control of molecular weight distribution, degree of crosslinking and gel content may not be critical to the performance as surface coatings. The temperature control is not as important as it is in the case of pressure-sensitive adhesives.

### Oligomers

Suitable oligomers are short chains of polymers that are capped with ethylenically unsaturated monomers (i.e. acrylates). Some examples of commercially available oligomers that may be used in the present inventive method are sold under the trade names of Ebycryl (by UCB), Photomer (by Cognis), Laramer (by BASF), and Craynor (by Sartomer).

The viscosity of oligomers is generally high enough so that a thickener is not usually necessary in the present inventive method when oligomers are used.

### Comonomers

The monomer can be copolymerized with a copolymerizable monomer capable of producing a polymer without adversely impacting the ability to polymerize the monomer by e-beam radiation at the temperature, residence times, pulse rates and total dose parameters of the invention. Suitable comonomers for pressure-sensitive adhesives and coatings include functional polar and nonpolar monomers, including both acidic and basic polar monomers. Such comonomers are preferred in pressure-sensitive adhesives, for example, for the shear properties that result.

A class of suitable comonomers include monoethylenically unsaturated comonomers having homopolymer glass transition temperatures (Tg) greater than about 0°C, preferably greater than 15°C.

Examples of useful polar copolymerizable monomers include, but are not limited to, acrylic acid, methacrylic acid, itaconic acid, N-vinyl pyrrolidone, N-vinyl caprolactam, substituted acrylamides, such as N,N,-dimethyl acrylamide and N-octylacrylamide, dimethylaminoethyl methacrylate, acrylonitrile, 2-carboxyethyl acrylate, maleic anhydride, and mixtures thereof.

Other suitable copolymerizable monomers include acrylate esters or vinyl esters of non-tertiary alkyl alcohols having from 1 to 3 carbon atoms in the alkyl moiety. Examples of such monomers are methyl acrylate, ethyl acrylate, methyl methacrylate, ethyl methacrylate, vinyl acetate, vinyl propionate, and the like. A specific example of a suitable nonpolar monomer is isobornyl acrylate.

When a comonomer is employed, the polymerizable composition can include about 70 to about 99 parts by weight, preferably from about 85 to 99 parts by weight acrylate monomer, with the balance being comonomer. The useful amounts of each type of monomer will vary depending upon the desired properties of the pressure-sensitive adhesive or coating and the choice of acrylate and comonomer. For example, when the comonomer is strongly polar, such as acrylic acid or methacrylic acid, a preferred range of comonomer is about 1 to about 15 parts by weight comonomer per 100 parts acrylate monomer and comonomer.

*Crosslinking Agent*

The polymerizable composition may also contain a crosslinking agent to reduce the dose required to achieve adequate crosslinking and/or to further control crosslinking of the adhesive or coating. Useful crosslinking agents include but are not limited to those selected from the group consisting of acrylic or methacrylic esters of diols such as butanediol diacrylate, hexanediol diacrylate, triols such as trimethylolpropane triacrylate, and tetrols such as pentaerythritol acrylate. Other useful crosslinking agents include but are not limited to those selected from the group consisting of polyvinylic crosslinking agents, such as substituted and unsubstituted divinyl benzene, triallylcyanurate and triallyl isocyanurate, difunctional urethane acrylate, such as Ebecryl 270 and Ebecryl 230 (1500 and 5000 weight average molecular weight acrylate urethanes, respectively, both available from Radcure Specialties), and mixtures thereof. When used, the adhesive syrup can typically include up to about 1 parts per hundred (pph), preferably less than about 0.3 pph crosslinking agent. The crosslinking agent can be added at any time prior to coating of the polymerizable composition for a pressure-sensitive adhesive or coating.

*Free-Radical Yielding Agent*

A free-radical yielding agent capable of efficiently capturing and transferring energy from a higher electron energy state to a lower state may optionally be admixed with the monomer(s), oligomer(s) or blend(s) thereof. The presence of a free-radical yielding agent can improve the rate of polymerization. Suitable free-radical yielding agents are those capable of providing a high yield of free-radicals, capable of providing a sensitizing effect upon acrylate-type monomers, and having a high transfer constant in chain radical reactions. Particularly suitable for use in the present invention are halogenated aliphatic hydrocarbons, exemplified by chlorinated saturated $C_{1-3}$ lower alkanes such as methylene chloride, chloroform, carbon tetrachloride, 1,2-dichloroethane, 1,1-dichlorethane and trichlorobenzene. The effect of the halogenated hydrocarbon is best produced at levels ranging from 0.01 to 5 wt% and preferably 0.1 to 1 wt%.

*Photoinitiators*

Photoinitiators may be present in the polymerizable composition. However, the photoinitiators contribute little to the chemistry of the polymerizable composition, and survive largely intact for subsequent processes that may be done. They are not necessary, however, for free-radical polymerization using the present inventive method.

Two possible photoinitiators include: 1-hydroxy-cyclohexyl-phenyl-ketone, which goes by the trade name IRGACURE 184, and is available from Sartomer Chemical Co., Westchester, Pennsylvania; and, 2,2-dimethoxy-2-phenylacetophenone, which goes by the trade name IRGACURE 651, and is available from Ciba-Geigy.

*Additives*

Typical additives, such as fibrous reinforcing agents used in the present inventive method may include fillers, fire retardants, foaming agents, opacifiers, pigments, plasticizers, rheological modifiers, softeners, solvents, stabilizers, tackifiers, ultraviolet protectants, etc. Such additives may be incorporated in the polymerizable composition in the proportions conventionally employed.

*Tackifiers*

A tackifier can be added to the pressure-sensitive adhesive syrup, or polymerizable composition, for purposes of facilitating coating of the adhesive syrup onto a support prior to polymerization and/or enhancing the adhesive properties of the resultant pressure-sensitive adhesive. Generally useful tackifiers are those that do not contain a significant amount of aromatic structure.

Suitable tackifiers include polymerized terpene resins, cumarone-indene resins, phenolic resins, rosins, and hydrogenated rosins. The adhesive composition can include about 5 to 50 wt% tackifier. Addition of less than about 5 wt% tackifier provides little enhancement in the adhesive strength of the composition, while addition of greater than about 50 wt% reduces both the cohesiveness and the adhesive strength of the composition.

*Solventless Blend or Mixture*

The polymerizable composition can include a solvent for purposes of facilitating mixing, but is preferably a solvent-free or nearly solvent-free composition of a liquid acrylate-type monomer(s) and any desired copolymerizable monomers. For selected polymerizable compositions for pressure-sensitive adhesives in which solvent is used, for example, it is generally preferred to incorporate about 5-10% of a natural plasticizing solvent, such as water or alcohol, to adjust the viscosity of the composition and enhance the generation of free radicals upon e-beam irradiation of the composition.

*Emulsion*

An advantage of the present invention is that it is versatile. As discussed above, the polymerizable composition may be solventless. However, a polymerizable composition that is an emulsion may also be polymerized using the present inventive method. The emulsion may be coated on-web, then polymerized using the present inventive method, and then subsequently dried.

*E-BEAM SOURCE*

Electron beams (e-beams) are generally produced by applying high voltage to tungsten wire filaments retained between a repeller plate and an extractor grid within a vacuum chamber maintained at about $10^{-6}$ Torr. The filaments are heated at high current to produce electrons. The electrons are guided and accelerated by the repeller plate and extractor grid towards a thin window of metal foil. The accelerated electrons, traveling at speeds in excess of $10^7$ meters/second (m/sec) and possessing about 70 to 300 kilo-electron volts (keV), pass out of the vacuum chamber through the foil window and penetrate into whatever material is positioned immediately below the window.
The quantity of electrons generated is directly related to the extractor grid voltage. As extractor grid voltage is increased, the quantity of electrons drawn from the tungsten wire filaments increases. E-beam processing can be extremely precise when under computer control, such that an exact dose and dose rate of electrons can be directed against what is desired to be polymerized.
Electron beam generators that produce pulses of accelerated electrons are commercially available. One example is an e-beam from North Star Research Corp. (NSRC) in Albuquerque, New Mexico. Another example of an e-beam machine that allows for pulse rate selection is the PYXIS 7000 (PYXIS), which is sold by Biosterile, Fort Wayne, Indiana.
For any given piece of equipment and irradiation sample location, the dosage delivered can be measured in accordance with ASTM E-1275 entitled "Practice for Use of a Radiochromic Film Dosimetry System." By altering extractor grid voltage, repetition rate, beam area coverage and/or distance to the source, various dose rates can be obtained.

*PROCESS PARAMETERS*

*Residence Time*

In a free radical polymerization, the rate of initiation determines the concentration of radicals. The rate of termination is generally proportional to the concentration of radicals, with a comparatively large number of terminations at high radical concentrations. This results in lower molecular weight and highly crosslinked gel. In the present invention, the rate of initiation resulting from electron beam has been controlled, so as to achieve high molecular weight between crosslinks and high conversion by decreasing the flux of electrons (current) and increasing the residence time under the beam to accumulate the desired dose. Residence time has been increased by lowering the speed of transit under the beam or increasing the area of irradiance under the beam.
The residence time using pulsed e-beam is less than that required when using a continuous e-beam. In order to achieve high conversion of monomer to polymer (i.e., greater than about 90%) using pulses of accelerated electrons at the dose levels specified herein, a residence time of about 1.5 to 5 seconds would generally be required.
A number of different methods can be employed to provide the desired total dose and residence time for polymerization. One method employs a shuttle system communicating with an on-off switch for the electron beam generator that causes the substrate with the coating of polymerizable composition to remain stationary under the e-beam window until the desired total dose of electron beam energy has been deposited. A second method employs a continuously moving conveyor belt to move the coated substrate under the e-beam window at a speed calculated to deposit the desired total dose of electron beam energy onto the polymerizable composition. A third method moves a continuous web of the polymerizable composition past an array of electron beam generators operated and positioned to provide the desired total dose of electron beam energy across an extended surface area of the web.

*Dose*

Dose is the total amount of energy deposited per unit mass. Dose is commonly expressed in kilograys (kGy). A kilogray is defined as the amount of radiation required to supply 1 joule of energy per gram of mass.

The total dose received by a polymerizable composition primarily affects the extent to which monomer is converted to polymer and the extent to which the polymers are crosslinked. In general, it is desirable to convert at least 95 wt%, preferably 99.5 wt%, of the monomers and/or oligomers to polymer. However, the conversion of monomers to polymer in a solventless or low solvent system is asymptotic as the reaction progresses due to diffusion limitations inherent in such systems. As monomer concentration is depleted it becomes increasingly difficult to further polymerize the diffusion-limited monomers.

Dose is dependent upon a number of processing parameters, including voltage, speed and beam current. Dose can be conveniently regulated by controlling line speed *(i.e.,* the speed with which the polymerizable composition passes under the e-beam window), the current supplied to the extractor grid, and the rate of the pulses of accelerated electrons. A target dose *(e.g.,* 20 kGy) can be conveniently calculated by the KI=DS equation, where K is the machine constant, I is current (mA), D is dose in kilograys, and S is speed, in fpm or cm/sec. The machine constant varies as a function of beam voltage and cathode width.

Generally, the dose required for full conversion is proportional to the dose rate. At sufficiently low dose rates, a dose of 20kGy will be sufficient but residence time may be too long to be practically maintained using e-beam. On the other hand, as dose rate is increased an excessively high dose will be required to overcome the higher rate of termination. For a conventional (continuous) e-beam, a dose on the order of 150-200 kGy may be required to achieve high conversion in a residence time on the order of 2 seconds. This will require a large power supply and may generate excessive heat. Furthermore, desired physical properties of the articles made by the present inventive method may be limited by the excessive crosslinking and grafting reactions as well as low molecular weight material that result from using a high dose.

In this invention, however, in which pulses of accelerated electrons are employed rather than a continuous beam, high conversion results at about the same total dose level as required for a continuous electron source, but in less time. For example, only about 2 seconds of residence time is required for pulsed e-beam, as opposed to about 5 seconds for continuous at a dose of 80 kGy (See Figure 5).

Dose rate is calculated from the dose delivered to the sample (kGy) divided by the duration of the exposure to radiation in seconds (residence time). Residence time governs the dose required, which in turn determines the dose rate.

The preferred dose per pulse is low. An optimum dose per pulse is about 10-30 Grays. At low dose per pulse, the excessive termination of propagating free radicals due to spatial overlap of e-beam produced tracks is avoided.

*Pulse Character*

Pulse Rate

The preferred pulse rate for pulsed e-beam polymerization is a high rate. An optimum practical pulse rate is about 1000-2000 pulses per second ("pps") or Hertz ("Hz"). A higher rate may, however, provide further benefit. The upper limit to the desired pulse rate is when the efficiency is reduced by sufficient temporal overlap of tracks so as to limit the time necessary to complete the heterogeneous phase of the polymerization. Up to that point, increasing pulse rate also increases efficiency.

Pulse Interval

Pulse interval is on the order of 1 millisecond between pulses. The kinetic rate constant is of sufficient magnitude to reflect rates of conversion significantly faster than a millisecond in time. ($K_p = 10^4$ to $10^5$ l/mol -s).

Pulse Width (or Duration)

Pulse width (a.k.a. pulse duration) is the full width at half maximum of the e-beam current as a function of time.

Pulse widths of up to 250 microseconds may be possible before they become sufficiently long enough in duration to begin to approach the equivalence of a continuous beam. The polymerization efficiency will decrease at this point and there will be no more advantage to widening the pulse width.

The pulse width or duration may be wide in the present inventive method. This provides a distinct advantage to the method.

If necessary, to achieve pulse durations on the order of 1 to 2 microseconds, it is necessary to use a high speed switch, such as a thyratron, in the pulse forming network. These devices are quite expensive. High speed switches are not, however, necessary for the present inventive method. Since wider pulse widths can be used effectively, conventional solid-state switches may be used. For example, in the present inventive method, a 25-microsecond pulse width may be used, which would allow the dose to be spread out sufficiently so as to reduce the thermal shock waves on the beam window. The pulse width is still, however, very small (1/20$^{th}$) compared to a pulse interval as short as 0.5 milliseconds.

*Inert Atmosphere*

E-beam irradiation of the polymerizable composition is preferably carried out in the presence of minimal amounts of oxygen, which is known to inhibit free-radical polymerization. Hence, e-beam irradiation of the polymerizable composition should be conducted in an inert atmosphere such as nitrogen, carbon dioxide, helium, argon, etc. Polymerization is preferably conducted, for example, in a nitrogen atmosphere containing up to about 3,000 parts per million (ppm) oxygen, preferably limited to 1,000 ppm oxygen, and more preferably 50 to 300 ppm to obtain the most desirable adhesive properties. The concentration of oxygen can conveniently be measured by an oxygen analyzer.

Oxygen can be substantially excluded in making an adhesive, for example, by sandwiching the adhesive syrup between solid sheets of material (e.g., a tape backing and a release liner) and irradiating the adhesive syrup through the sheet material.

*Temperature*

Another aspect of the invention involves curing/polymerizing at low temperatures. Superior adhesive properties and high conversion were achieved for pressure sensitive adhesives by cooling the adhesive syrup for a pressure-sensitive adhesive to a temperature below 20°C, preferably below 10°C and most preferably below 5°C. The temperature was preferably maintained between about -80°C to 10°C and most preferably between about 0 to 5°C. *See* U.S. Patent Application Serial No. 09/118,392. It is believed that by conducting polymerization using a continuous beam of accelerated electrons at temperatures below 20°C, the rate of polymer chain propagation is increasingly favored over the rate of termination, with the effect of producing polymers with a higher gel content and higher conversion.

When using the pulses of accelerated electrons, similar advantages were found at low temperatures because it allows the use of instantaneously high dose rates per pulse. Low temperature increases the viscosity of the system. When the viscosity is increased, the diffusion of free radicals is slowed. This helps to isolate the free radicals, reduce termination, and allow for more polymerization. Therefore, the temperature is preferably maintained at a low temperature during the present inventive process to make pressure sensitive adhesive articles. However, it is not necessary, but may be beneficial, to maintain the low temperature for the production of other articles (i.e. coatings) using the inventive process: In the alternative, for articles other than pressure sensitive adhesives, it may be beneficial to keep the temperature low for about the first 40-80%, and preferably 50-70%, of the reaction time. It is also known that higher levels of crosslinker (1%) may be used to off-set the need for low temperatures by speeding up the rate of conversion. However, if higher levels of crosslinker are used to make a pressure-sensitive adhesive article, the adhesive physical properties may be limited.

The term "low temperature" refers to any temperature below ambient, which can be consistently maintained, and which is below about 20°C. However, there are increasing advantages with lower temperatures down to -70°C (i.e. using dry ice).

The temperature of the polymerizable composition can be maintained at the desired low temperature during polymerization, or a portion of the polymerization time, by a variety of techniques, such as introducing chilled nitrogen gas into the radiation chamber, placing the coated polymerizable composition upon a cooling plate, or use of any other type of heat sink or chilled drum.

**PRESSURE-SENSITIVE ADHESIVES**

Pressure-sensitive adhesives must generally balance several competing properties (*e.g.*, tackiness, peel strength, creep resistance, cohesiveness, etc.) in order to meet the requirements of the particular end use to which the adhesive is to be employed. The properties of a pressure-sensitive adhesive are primarily affected by monomer composition, molecular weight and crosslink density. For example, monomer composition generally determines the glass transition temperature ($T_g$), bulk properties and surface chemistry of the adhesive, all of which affect adhesion. With respect to polymers having a sufficient crosslink density, higher molecular weights normally result in better cohesion. Cohesion can also be increased by increasing the degree of covalent crosslinking between ionically bonded polymers and secondary intermolecular bonding.

High gel content provides the desired properties for a pressure-sensitive adhesive. For example, high gel content provides good creep-resistance, and high shear properties.

Pressure-sensitive adhesives with high conversion are particularly important for adhesives intended for medical, optical and electronic applications, where even small amounts of residual monomer may irritate the skin, inhibit the transmission of light and/or damage or corrode metal parts.

Under the present inventive method, acrylate pressure-sensitive adhesives having superior peel adhesion and shear strength with high conversion can also be obtained, without the use of solvents, by e-beam copolymerization of the acrylate pressure-sensitive adhesive syrup with pulses of accelerated electrons of defined dose, residence time and pulse rate ranges. The present inventive method can, when properly optimized, achieve the same results for the adhesive as the continuous electron beam at about the same dose level but in only 2 seconds of residence time, as opposed to about 5 seconds. This is a great advantage in allowing a continuous process to be run at a more rapid pace.

Pressure-sensitive adhesives produced in accordance with the e-beam process described herein can possess desirable adhesive properties and characteristics, including good shear strength and peel adhesion, with high conversion. Generally, acrylate pressure-sensitive adhesives can be produced having a peel adhesion of at least 25 N/dm, frequently over 55 N/dm, and a shear strength, or shear adhesion time, of at least 300 minutes, frequently over 10,000 minutes, with a conversion of greater than about 90 wt%, frequently greater than about 97 wt%. In addition, pressure-sensitive adhesives can be produced having a gel content of greater than 80 wt%, frequently greater than 95 wt%.

*COATINGS*

The present inventive method can also be used, more generally, to polymerize coatings. One such example of a coating is a hard coat to protect surfaces. Coatings are coated onto substrates to protect such substrates from physical damage like scratches, abrading and the like. The coatings may also be used to improve the physical appearance of the surface that is coated. The substrates that may be coated by a coating include anything that is dry to the touch. Examples of such substrates include, but are not limited to, road signs, and furniture etc.

This invention is further illustrated by the following examples, wherein examples in which a residence time of less than 1.5 or more than 5 seconds is mentioned have to be regarded as comparative examples.

**EXAMPLES**

**Testing Procedures**

The following tests have been used to evaluate polymerized compositions of the invention.

*Conversion*

A 14.5 cm$^2$ (1.5 in x 1.5 in square) sample was die-cut from the irradiated substrate and the release liner removed and discarded. The uncovered sample was weighed (Sample Wt$_{Before}$), placed in an oven for 2 hours at 100°C, and then weighed again (Sample Wt$_{After}$). A 14.5 cm$^2$ sample of uncoated substrate was also die-cut and weighed (Substrate Wt). The percent conversion (% Conv) was calculated in accordance with the equation provided below.

$$\% \text{ Conv} = (\text{Sample Wt}_{After} - \text{Substrate Wt})(100)/(\text{Sample Wt}_{Before} - \text{Substrate Wt})$$

*Gel Percent*

A tape sample was die cut into a square having an area of about 14.5 cm$^2$. The release liner was then peeled by hand from the pressure-sensitive adhesive (PSA) tape. The PSA tape sample was placed in a pre-weighed aluminum pan (mO), weighed (ml), then submerged in ethyl acetate in a Nalgene container for 16 hours to extract dissolvable reactants from the polymerized coating. The sample portion was then removed, placed in the pan and dried for 120 minutes in an oven set at 60°C, allowed to cool to room temperature, and weighed (m2). The gel percent was calculated by the following formula:

$$\text{Gel \%} = (\text{m2} - \text{m0}) (100) / (\text{m1-m0}).$$

Results are for each sample and are reported to the nearest whole number.

*Swell Percent*

Swell was measured as an indication of cross-link density. This measurement was taken during the Gel Percent procedure. The solvent soaked sample placed in the pre-weighed pan was immediately placed on a scale and weighed (to avoid any solvent evaporation from the tape sample). Swell was calculated as the difference between the weight of the sample before and after submersion in the solvent. Low swell and no visible change in size/form indicates higher cross-link density.

*Peel Adhesion*

Pressure-sensitive adhesive tape samples cut approximately 1.27 cm (0.5 in) wide and at least 12 cm (5 in) long were tested for 180° peel adhesion to a clean glass plate. Prior to being cut, the samples were placed for 20-30 minutes in an oven set at 65°C and then allowed to rest for at least 12 hours in a controlled environment in which the temperature was maintained at 22°C and relative humidity maintained at 50%. The samples were adhered to the glass test surfaces by rolling the tapes with one pass of a 1.8 kilograms (kg) (4.0 lb.) hard-rubber roller moving at a speed of about 230 cm/min (90 in/min). After about one minute contact time had elapsed, the free end was then attached to the adhesion scale of a Model 3M90 slip/peel tester, available from Instrumentors, Inc., (set to record average peel values) and pulled in 180° geometry at a 230 cm/min (90 in/min) peel rate. The free end of the tape was doubled back so the tape was nearly touching itself to cause the angle of removal to be 180°. Peel adhesion values were measured in oz/ 0.5 in and converted to N/dm. Adhesion failure was adhesive in nature, i.e., failure was at the interface of the adhesive and the test surface. Reported values are an average of at least two measurements.

*Shear Strength*

Shear strength was measured on pressure-sensitive adhesive tape samples at ambient temperatures. The PSA tape was placed for 20 minutes in an oven set at 65°C and then allowed to rest for at least 12 hours in a controlled environment in which the temperature was maintained at 22°C and relative humidity maintained at 50%. A section of tape was cut and adhered to a stainless steel panel by hand with a 2.1 kg (4.5 lb.) roller using 6 passes. A 12.7 mm x 12.7 mm (0.5 in x 0.5 in) portion of tape was in firm contact with the steel panel and an additional end portion of the tape was free. A 1000 gram weight was adhered to the free end portion of the tape. The samples were placed on a rack in a room at 25°C and 50% relative humidity. The steel test panel was tilted 2° from vertical (creating a 178° angle with the tape) to insure against any peel forces acting on the sample. The amount of time for the tape to separate from the test panel was recorded. The test was typically stopped at 10,000 minutes. Reported values are a measurement from a single sample if no failure occurred and from an average of two samples measured sequentially if the first failed in less than 10,000 minutes. Mode of adhesion failure was adhesive in nature, i.e., failure was at the interface of the adhesive and the test surface.

### Materials Used

The following terminology, abbreviations, and trade names are used in the examples:

| *Type* | Trade Name or Acronym | Description |
|---|---|---|
| acrylate monomer | IOA | iso-octyl acrylate, available from Sartomer Chemical Co., Westchester, Pennsylvania. |
| copolymerizable material | AA | acrylic acid, available from Aldrich Chemical Co., St. Louis, Missouri. |
| photoinitiator | IRGACURE 651 | 2,2-dimethoxy-2-phenylacetophenone, available from Ciba-Geigy. |
| crosslinking agent | HDODA | 1,6-hexanedioldiacrylate available from UCB Chemicals Corporation, Smyrna, Georgia. |
| substrate | treated PET | polyethylene terephthalate film chemically treated an aminated polybutadiene priming agent, 38 micrometers thick. |
| release liner | | silicone-coated PET. |

Throughout the Examples, the Specification and the Claims, all parts, percentages, and ratios are by weight unless otherwise indicated. Parts of any precursor emulsion components, other than reactive materials, is based on 100 parts by weight of the reactive materials. Most measurements were recorded in English units and converted to SI units.

*Process*

An adhesive precursor syrup consisting of 90 wt% of acrylate monomer (IOA), 10 wt% copolymerizable material (AA) and 0.04 pph of a photoinitiator was made according to U.S. Pat. No. 5,028,484, Ex. 19-26. The mixture was partially photopolymerized in an inert nitrogen atmosphere by ultraviolet light irradiation to form an original coatable adhesive syrup having a Brookfield viscosity of about 450 centipoise (cP). A modified syrup was made by incorporation of sufficient additional copolymerizable material, AA, to change the weight ratio of IOA:AA to 88:12 to minimize effects of possible evaporation of AA during processing. A crosslinking agent (HDODA), was either added at an amount of 0.3 parts per 100 parts of modified 88:12 syrup to make Syrup A or at a similar amount to the original 90:10 syrup to make Syrup B. The syrup was coated with a knife-coater onto treated PET film at a nominal coating thickness of 50 micrometers ($\mu$m). The coated samples were cut into 100mm x 200mm (4 in x 8 in) rectangles for pulsed e-beam irradiation or 150mm x 150mm (6 in x 6 in) rectangles for continuous e-beam irradiation. Most samples were then placed onto a copper plate resting upon an ice-filled tray, with the trays generally repacked with ice for each sample, to maintain the sample at a temperature of approximately 0°C throughout the irradiation process. Some samples were not maintained at a cool temperature but were irradiated at ambient temperatures with the usual heating that accompanied irradiation. The coatings were polymerized "open-faced" (*i.e.*, no cover film). Oxygen concentration in the ambient gas in the exposure chamber was monitored and oxygen levels were generally kept at 100 ppm or less by purging the exposure chamber with nitrogen or a span gas (a customized, blended gas composition with a specified content for each component) containing 100 ppm oxygen in nitrogen.

The coated samples were either irradiated with one of two pulsed-electron beam irradiation sources or a continuous electron beam irradiation source. The samples were irradiated at increasing irradiation time intervals, higher dose per pulse, and higher pps or current at each process condition to vary total dose applied to the coating. The pulsed sources used were (1) the PYXIS 7000 pulsed e-beam system manufactured by BioSterile Technology, Inc., Fort Wayne, Indiana (PYXIS) or (2) a prototype pulsed e-beam assembled by North Star Research Corporation, Albuquerque, New Mexico (NSRC), which caused similar results with similar conditions. The dose per pulse was varied on the PYXIS by inserting a screen between the window and the sample. The dose per pulse was varied on the NSRC by changing the current. Both pulsed e-beam systems used a pulse duration of approximately 2 microseconds and an accelerating voltage set to a value of 180 kV. Dose rate was varied by changing either (1) the dose per pulse or (2) the pulse rate. The dose per pulse was varied from 17 Gy/pulse to 483 Gy/pulse. The pulse interval was varied from about 100 pulses/ second (pps) to about 1800 pps. Total dose in kilograys was calculated from the pulse interval and the dose per pulse.

The continuous irradiation source was a CB-175 ELECTROCURTAIN accelerated electron source manufactured by Energy Sciences, Inc. of Wilmington, Massachusetts. The continuously irradiated samples were made according to WO00/04055 Example 5 except the accelerating voltage was 180kV and the dose rate was varied by changing the electron beam current.

The irradiated adhesive film samples were covered with a release liner immediately after e-beam irradiation to prevent evaporation of any residual monomer. These covered samples were placed into ZIPLOC bags for storage until testing (up to several days). Samples for residual, gel, and swell measurements were die cut from the most uniformly irradiated areas of the adhesive samples. Irradiation uniformity was determined by dosimetry using 43.5 micron thick Far West Technologies dosimeter chips. The percent conversion was measured and the dose calculated for each set of conditions. Conversion percent was plotted against calculated dose for the experimental variables and plots were extrapolated to 97% conversion. Unless specified, only the conditions (extrapolated) that resulted in conversions of about 97% were reported for samples irradiated with an electron beam source.

*Example 1*

Example 1 illustrates the effect of dose per pulse on total dose necessary to obtain an extrapolated conversion of about 97%.

Pressure-sensitive adhesive samples were made by pulsed electron beam irradiation at 0°C temperature using syrup A. The pulse source was the PYXIS source for Sample A and the NSRC source for Sample B-P. The pulse rate and doses per pulse were varied, and total doses were calculated.

Each coated sample was measured for conversion percent. Extrapolated conditions that resulted in a conversion of about 97 % were recorded in Table 1.

Table 1

| Example | Pulses per sec | Dose per pulse Gy | Conversion Dose kGy |
|---------|----------------|-------------------|---------------------|
| 1A | 150 | 55 | 47 |
| 1B | 150 | 86 | 59 |
| 1C | 150 | 147 | 88 |
| 1D | 150 | 213 | 109 |
| 1E | 150 | 247 | 117 |
| 1F | 150 | 387 | 150 |
| 1G | 150 | 483 | 170 |
| 1H | 800 | 17 | 50 |
| 11 | 800 | 27 | 60 |
| 1J | 800 | 38 | 75 |
| 1K | 800 | 50 | 94 |
| 1L | 800 | 71 | 114 |
| 1M | 800 | 90 | 137 |
| 1N | 1400 | 17 | 68 |
| 1O | 1400 | 27 | 84 |
| 1P | 1400 | 40 | 117 |

As seen in Table 1 and illustrated in Figure 3, the required dose to achieve about 97% conversion increased nearly linearly with dose per pulse at all pulse rates. The loss of energy efficiency with increasing dose per pulse was more pronounced at high pulse rate. Total dose needed to achieve about 97% conversion increased more sharply as the pulse rate and dose per pulse increased. As the pulse rate decreased (150 pps), the curve was not as steep because more time was allowed for homogeneous polymerization to take place. Thus the high spatial overlap introduced at high dose per pulse was off-set to some degree by allowing more time for the few surviving free radicals to continue to polymerize before the next pulse was introduced.

Selected samples were tested for peel adhesion and shear strength. Results are shown in Table 2.

Table 2

| Example | Pulses per sec | Dose per pulse Gy | Conversion Dose kGy | Peel Adhesion N/dm (oz/in) | Shear Strength Minutes (min.) |
|---------|----------------|-------------------|---------------------|----------------------------|-------------------------------|
| 1B | 150 | 86 | 59 | 36.0 (32.9) | 10,000 |
| 1C | 150 | 147 | 88 | 44.9 (41.0) | 10,000 |
| 1D | 150 | 213 | 109 | 40.8 (37.3) | 10,000 |
| 1E | 150 | 247 | 117 | 36.3 (33.2) | 10,000 |
| 1F | 150 | 387 | 150 | 35.8 (32.7) | 8307 |
| 1G | 150 | 483 | 170 | 34.6 (31.6) | 9504 |

As seen in Table 2, peel adhesion reached a maximum value and steadily decreased with increased dose. Shear strength began to decrease at high dose levels.

*Example 2*

Example 2 illustrates the effect of low dose per pulse and high dose rate on the ability to obtain conversion of about 97%.

Samples of Example 2 were made as Example 1 with various pulse rates, and doses per pulse from both sources. Process variables and resulting dose values necessary to achieve polymerized pressure-sensitive adhesive coatings having conversions of about 97% are shown in Table 3.

Table 3

| Example | Dose per pulse Gy (Source) | Pulses per sec | Conversion Dose kGy |
|---------|----------------------------|----------------|---------------------|
| 2A | 90 (NSRC) | 200 | 60 |
| 2B | 90 (NSRC) | 500 | 113 |
| 2C | 90 (NSRC) | 800 | 137 |
| 2D | 71 (NSRC) | 200 | 60 |
| 2E | 71 (NSRC) | 500 | 96 |
| 2F | 71 (NSRC) | 800 | 114 |
| 2G | 50 (PYXIS) | 100 | 38 |
| 2H | 50 (PYXIS) | 175 | 49 |
| 2I | 50 (PYXIS) | 250 | 62 |
| 2J | 50 (PYXIS) | 300 | 68 |
| 2K | 50 (PYXIS) | 360 | 70 |
| 2L | 50 (NSRC) | 200 | 51 |
| 2M | 50 (NSRC) | 500 | 77 |
| 2N | 50 (NSRC) | 800 | 94 |
| 20 | 50 (NSRC) | 1000 | 103 |
| 2P | 30 (PYXIS) | 360 | 48 |
| 2Q | 27 (NSRC) | 800 | 64 |
| 2R | 27 (NSRC) | 1400 | 83 |
| 2S | 17 (NSRC) | 800 | 52 |
| 2T | 17 (NSRC) | 1400 | 68 |
| 2U | 17 (NSRC) | 1800 | 73 |

As seen in Table 3 and illustrated in Figure 4, conversions of about 97% were obtained with high dose rates and low dose per pulse for a modified syrup similar to that used in Example 1. Consistent with the results of Example 1, the results above illustrated that the total dose required for high conversion increased as the pulse rate increased. However, this loss of conversion efficiency with increasing pulse rate became significantly less as the pulse rate was increased beyond 500-600 pps, particularly for low dose per pulse (20 - 30 grays). In addition, calculated spatial overlap of electron tracks was avoided at low dose per pulse.

*Example 3*

Example 3 illustrates the effect of pulse conditions on the irradiation time needed to obtain conversion of about 97%.

Samples 3D, 3F, 3H, 3R, and 3X of Example 3 were made as Example 1 with various pulse rates and doses per pulse. The remaining samples are the same as in Example 1 and 2 as indicated by the reference numbers. The pulse source was the PYXIS source for Sample U and the NSRC source for Sample A-T and V-AA. Process variables necessary to achieve polymerized pressure-sensitive adhesive coatings having conversions of about 97% are shown in Table 4.

Table 4

| Example | Reference | Dose/pulse Gy (Source) | Pulses /sec | Dose Rate kGy/sec | Conversion Dose kGy | Residence Time Sec |
|---|---|---|---|---|---|---|
| 3A | 1 G | 483 | 150 | 72.5 | 170 | 2.3 |
| 3B | 1F | 387 | 150 | 58.1 | 150 | 2.6 |
| 3C | 1E | 247 | 150 | 37.1 | 117 | 3.2 |
| 3D | new | 247 | 200 | 49.4 | 133 | 2.7 |
| 3E | 1D | 213 | 150 | 32.0 | 109 | 3.4 |
| 3F | new | 213 | 200 | 43.6 | 118 | 2.7 |
| 3G | 1C | 147 | 150 | 22.1 | 88 | 4.0 |
| 3H | new | 147 | 200 | 29.4 | 97 | 3.3 |
| 31 | 2B | 90 | 500 | 45.0 | 100 | 2.2 |
| 3J | 1M | 90 | 800 | 7.0 | 137 | 1.9 |
| 3K | 2D | 71 | 200 | 14.2 | 60 | 4.2 |
| 3L | 2E | 71 | 500 | 35.5 | 89 | 2.5 |
| 3M | 1L | 71 | 800 | 56.8 | 114 | 2.0 |
| 3N | 2L | 50 | 200 | 10.0 | 51 | 5.0 |
| 30 | 2M | 50 | 500 | 25.0 | 77 | 3.1 |
| 3P | 1K | 50 | 800 | 40.0 | 94 | 2.4 |
| 3Q | 2G | 50 | 1000 | 50.0 | 103 | 2.1 |
| 3R | new | 40 | 500 | 20.0 | 62 | 3.1 |
| 3S | 1J | 40 | 800 | 32.0 | 82 | 2.6 |
| 3T | 1P | 40 | 1400 | 56.0 | 117 | 2.1 |
| 3U | 2P | 30 | 360 | 9.7 | 48 | 4.4 |
| 3V | 1I | 27 | 800 | 21.6 | 60 | 2.8 |
| 3W | 1O | 27 | 1400 | 37.8 | 84 | 2.2 |
| 3X | new | 27 | 1800 | 48.6 | 73 | 1.5 |
| 3Y | 1H | 17 | 800 | 13.6 | 50 | 3.7 |
| 3Z | 1N | 17 | 1400 | 23.8 | 68 | 2.9 |
| 3AA | 2U | 17 | 1800 | 30.6 | 70 | 2.3 |

Comparative Samples were made by continuously irradiating samples made with one of two syrups at different dose rates. Both Syrup A (88:12) and Syrup B (90:10) were used. Irradiation conditions and compositions are shown in Table 5.

Table 5

| Example | IOA:AA | Dose Rate kGy/sec | Residence Time sec |
|---|---|---|---|
| C3A | 90:10 | 8.6 | 6.4 |
| C3B | 90:10 | 17.2 | 4.2 |
| C3C | 90:10 | 22.1 | 4.0 |
| C3D | 90:10 | 29.4 | 3.3 |
| C3E | 90:10 | 32.0 | 3.1 |

Table continued

| Example | IOA:AA | Dose Rate kGy/sec | Residence Time sec |
|---------|--------|-------------------|--------------------|
| C3F | 90:10 | 42.6 | 2.7 |
| C3G | 90:10 | 54.2 | 2.3 |
| C3H | 90:10 | 66.2 | 2.1 |
| C3I | 90:10 | 78.2 | 1.9 |
| C3J | 90:10 | 84.4 | 1.8 |
| C3K | 88:12 | 10.9 | 5.3 |
| C3L | 88:12 | 23.8 | 3.6 |
| C3M | 88:12 | 40.0 | 2.9 |
| C3N | 88:12 | 55.0 | 2.2 |
| C3O | 88:12 | 85.0 | 1.7 |

The data of Tables 4 and 5 are shown in Figure 5 to illustrate a comparison of pulsed electron beam irradiation to continuous electron beam irradiation to polymerize pressure-sensitive adhesives to a conversion of about 97%. The irradiation time and the dose rate shown in Tables 4 and 5 are plotted for various doses/pulse and pulse rates of a pulsed electron beam irradiation process and with similar irradiation times needed for various dose rates by a continuous electron beam irradiation process. In Figure 5, the dependence of irradiation time on dose rate (initiation rate) for continuous exposure is shown by the uppermost or top curve. As expected for a free radical polymerization the irradiation time varies as roughly the reciprocal of the square root of the dose rate. The irradiation time data for pulsed polymerization also appears to follow the reciprocal of the square root of the dose rate dependence, but there appears to be several such curves depending on the dose per pulse. At high values of dose per pulse (147 - 483 grays) pulsed polymerization is either less efficient or equally efficient as continuous polymerization, i.e., irradiation times for pulsed polymerization greater than or equal to those required for continuous polymerization at the same dose rate. Between doses per pulse of 50 and 90 grays, pulsed polymerization is somewhat more efficient than continuous polymerization. At doses per pulse of 40 grays or less pulsed polymerization is significantly more efficient than continuous polymerization. Because of the reciprocal of the square root of the dose rate shape of the curves, an irradiation time of about 2 seconds seems to be a practical lower limit on irradiation time. Pulsed polymerization at low dose per pulse requires a total dose of approximately 80 kilograys while continuous polymerization requires a total dose of approximately 140 kilograys at the same irradiation time of about 2 seconds. The dose for pulsed e-beam polymerization is only about 57% of the total dose required by continuous polymerization.

*Example 4*

Example 4 illustrates the effect of pulsed electron beam irradiation on polymerization properties.
Samples of Example 4 were made as Example 1 at various irradiation times. The pulse rate was 1400 pps, the dose per pulse was 17Gy/pulse, the dose rate was 23.8 kGy/s and the irradiation time was varied by changing line speed to obtain samples having a range of conversion %. Gel %, Swell % and Conversion % were measured for each sample. Process conditions and test results are shown in Table 6.

Table 6

| Example | Residence Time sec | Dose kGy | Gel % | Swell % | Conversion % |
|---------|--------------------|----------|-------|---------|--------------|
| 6A | 0.82 | 19.5 | 8.9 | 4210 | 20.9 |
| 6B | 1.00 | 23.8 | 11.4 | 3960 | 33.9 |
| 6C | 1.26 | 27.6 | 13.0 | 3530 | 36.9 |
| 6D | 1.35 | 32.1 | 17.2 | 2730 | 40.7 |
| 6E | 2.61 | 38.3 | 30.2 | 1590 | 52.5 |
| 6F | 2.14 | 50.9 | 49.2 | 900 | 64.5 |
| 6G | 1.98 | 47.1 | 67.0 | 630 | 79.7 |

Table continued

| Example | Residence Time sec | Dose kGy | Gel % | Swell % | Conversion % |
|---|---|---|---|---|---|
| 6H | 2.43 | 57.8 | 74.7 | 570 | 84.9 |
| 6I | 2.56 | 60.9 | 78.2 | 390 | 88.0 |
| 6J | 2.86 | 68.1 | 86.6 | 500 | 95.9 |

Comparative Samples were made by continuously irradiating samples made with Syrup A at a current of 0.67mA, resulting in a dose rate of 23.8 kGy/s, and various line speeds to achieve different dose levels. Each sample was measured for Gel %, Swell % and Conversion %. Irradiation conditions, Gel %, Swell % and Conversion % are shown in Table 7.

Table 7

| Example | Speed mm/s | Residence Time sec | Dose kGy | Gel % | Swell % | Conversion % |
|---|---|---|---|---|---|---|
| C4A | 81 | 1.26 | 30 | 18.0 | 2540 | 37.9 |
| C4B | 67 | 1.47 | 35 | 28.4 | 1540 | 46.3 |
| C4C | 60 | 1.68 | 40 | 36.9 | 1180 | 53.0 |
| C4D | 54 | 1.89 | 45 | 50.2 | 810 | 64.2 |
| C4E | 44 | 2.30 | 55 | 73.4 | 560 | 84.7 |
| C4F | 37 | 2.74 | 65 | 81.9 | 460 | 91.6 |
| C4G | 32 | 3.17 | 75 | 85.2 | 420 | 95.0 |
| C4H | 28 | 3.97 | 85 | 87.7 | 411 | 97.0 |
| C6I | 25 | 4.00 | 95 | 89.9 | 407 | 97.6 |
| C6J | 23 | 4.44 | 105 | 89.9 | 397 | 98.2 |

As seen in Tables 6 and 7 and illustrated in Figure 6, adhesive properties of Gel % and Swell % are nearly identical for adhesives made with either pulsed electron beam or continuous electron beam irradiation when conversion % is above 70%, but the adhesive properties differ at lower conversions.

*Example 5*

Example 5 illustrates the effect of irradiation temperature on conversion %.

Samples of Example 5 were made as Example 1 at two irradiation temperatures and various irradiation times. The pulse rate was 1400 pps, the dose per pulse was 17Gy/pulse and the irradiating temperature was either maintained at about 0°C or initially at room temperature of about 25°C and allowed to rise freely during the irradiation of a sample. Conversion % was measured for each sample.

Initial irradiation temperature, dose and conversion % values are shown in Table 8.

Table 8

| Example | Temperature °C | Residence Time sec | Dose kGy | Conversion % |
|---|---|---|---|---|
| 5A | 0 | 0.82 | 19.5 | 29.9 |
| 5B | 0 | 1.00 | 23.8 | 33.9 |
| 5C | 0 | 1.16 | 27.6 | 36.9 |
| 5D | 0 | 1.35 | 32.1 | 40.7 |
| 5E | 0 | 1.61 | 38.3 | 52.5 |
| 5F | 0 | 1.98 | 47.1 | 79.7 |
| 5G | 0 | 2.43 | 57.8 | 84.9 |

Table continued

| Example | Temperature °C | Residence Time sec | Dose kGy | Conversion % |
|---------|----------------|--------------------|----------|--------------|
| 5H | 0 | 2.56 | 60.9 | 88.0 |
| 5I | 0 | 2.86 | 68.1 | 95.9 |
| 5J | 25 | 1.26 | 30.0 | 43.4 |
| 5K | 25 | 1.68 | 40.0 | 55.4 |
| 5L | 25 | 2.10 | 50.0 | 62.4 |
| 5M | 25 | 2.52 | 60.0 | 71.8 |
| 5N | 25 | 2.94 | 70.0 | 77.1 |

As seen in Table 8 and illustrated in Figure 7, similar doses were required for the time to achieve conversions of up to about 50% at both temperatures to achieve the same level of conversion. However, higher percent conversion was achieved for conversion above about 50% at 0°C than at 25°C.

Samples were irradiated to a total dose of 58 kGy for each irradiating temperature. Peel strength and shear time were measured for each sample. The results are shown in Table 9. Reported peel strength is an average of 2 measurements and reported shear time is an average of 4 measurements.

Table 9

| Example | Temp °C | Residence Time sec | Dose kGy | Peel N/dm | Shear min. |
|---------|---------|--------------------|----------|-----------|------------|
| 50 | 0 | 2.44 | 58.0 | 66.4 | 9200 |
| 5P | 25 | 2.44 | 58.0 | 67.4 | 3700 |

As seen in Table 9, temperature had an affect on shear strength but not peel adhesion.

*Example 6*

Example 6 illustrates the effect of irradiation below ambient temperatures on conversion %.

Samples of Example 6 were made as Example 1 at two irradiation temperatures and various irradiation times. The pulse rate was 360 pps, the dose per pulse was 48 Gy/pulse and the irradiating temperature was either maintained at about 0°C or about -78°C (by replacing the ice with dry ice). Conversion % was measured for each sample.

Initial irradiation temperature, dose and conversion % values are shown in Table 10.

Table 10

| Example | Temperature °C | Residence Time sec | Dose kGy | Conversion % |
|---------|----------------|--------------------|----------|--------------|
| 6A | 0 | 2.32 | 40 | 52.6 |
| 6B | 0 | 2.60 | 45 | 61.0 |
| 6C | 0 | 2.89 | 50 | 73.1 |
| 6D | 0 | 3.18 | 55 | 81.2 |
| 6E | 0 | 3.47 | 60 | 91.2 |
| 6F | 0 | 3.76 | 65 | 95.0 |
| 6G | 0 | 4.05 | 70 | 96.6 |
| 6H | 0 | 4.34 | 75 | 97.3 |
| 6I | 0 | 4.63 | 80 | 98.4 |
| 6J | -78 | 2.32 | 40 | 43.4 |
| 6K | -78 | 2.60 | 45 | 54.6 |
| 6L | -78 | 2.89 | 50 | 70.9 |

Table continued

| Example | Temperature °C | Residence Time sec | Dose kGy | Conversion % |
|---------|----------------|--------------------|----------|--------------|
| 6M | -78 | 3.18 | 55 | 92.8 |
| 6N | -78 | 3.47 | 60 | 97.1 |
| 60 | -78 | 3.76 | 65 | 97.7 |
| 6P | -78 | 4.05 | 70 | 96.2 |
| 6Q | -78 | 4.34 | 75 | 97.6 |
| 6R | -78 | 4.63 | 80 | 98.0 |

As seen in Table 10, similar doses were required to achieve conversions up to about 50% at both temperatures.

*Example 7*

Example 7 illustrates the effect of polymerization using only pulsed electron beam versus sequential irradiation with pulsed electron beam and followed by continuous electron beam.

Samples of Example 7 were made in a manner similar to Example 1 with the PYXIS pulsed source at 360 pps and a dose rate of 17 kGy/sec. Exposure times were varied to obtain a specific dose. After this irradiation step was complete the films were immediately covered with a release liner to prevent residual monomer evaporation. For some samples, the release liner was removed, the samples were conveyed through the beam path of the CB-175 continuous electron beam source at ambient temperature at a web speed of 25 ft/min at different current settings (resulting in different dose rates) to obtain selected doses. Immediately after the second irradiation, the samples were again covered with release liners. A single sample at each condition was tested for Conversion %. Process conditions and test results are shown in Table 11.

Table 11

| Example | Dose kGy | Time sec | Current mA | 1st Conv % | 2nd Conv % |
|---------|----------|----------|------------|------------|------------|
| 7A | 35 | 2.1 | --- | 49.8 | --- |
| 7B | 40 | 2.4 | --- | 55.4 | --- |
| 7C | 45 | 2.6 | --- | 69.3 | --- |
| 7D | 50 | 2.9 | --- | 79.7 | --- |
| 7E | 60 | 3.5 | --- | 96.7 | --- |
| 7F | 70 | 4.1 | --- | 98.0 | --- |
| 7G | 80 | 4.7 | --- | 97.5 | --- |
| 7H | 70 | 2.1 | 1.20 | 49.8 | 92.1 |
| 71 | 75 | 2.1 | 1.37 | 49.8 | 92.1 |
| 7J | 80 | 2.1 | 1.54 | 49.8 | 93.8 |
| 7K | 85 | 2.1 | 1.71 | 49.8 | 94.9 |
| 7L | 90 | 2.1 | 1.88 | 49.8 | 96.8 |
| 7M | 75 | 2.4 | 1.20 | 55.4 | 93.4 |
| 7N | 80 | 2.4 | 1.37 | 55.4 | 93.2 |
| 70 | 85 | 2.4 | 1.54 | 55.4 | 94.0 |
| 7P | 90 | 2.4 | 1.71 | 55.4 | 95.7 |
| 7Q | 95 | 2.4 | 1.88 | 55.4 | 95.8 |
| 7R | 80 | 2.6 | 1.37 | 69.3 | 96.3 |
| 7S | 85 | 2.6 | 1.54 | 69.3 | 96.2 |

Table continued

| Example | Dose kGy | Time sec | Current mA | 1st Conv % | 2nd Conv % |
|---------|----------|----------|------------|------------|------------|
| 7T | 90 | 2.6 | 1.71 | 69.3 | 96.8 |
| 7U | 95 | 2.6 | 1.88 | 69.3 | 97.2 |

As seen in Table 11, a conversion of about 97% could be achieved at a dose of 60 kGy with pulsed electron beam irradiation and with 90 kGy with a combination of pulsed electron beam irradiation followed by continuous electron beam irradiation. While it is reasonably effective to interrupt the pulsed electron beam polymerization at 50% conversion and complete with continuous, better residual reduction is achieved if the conversion is allowed to reach about 70%. This coincides with the convergence of the curves shown in Figure 6. At this point there no longer appears to be any significant further advantage to pulsed polymerization. However, interrupting the polymerization does appear to have increased the total dose required for conversion to some degree.

**Claims**

1.   A method for polymerizing a pressure-sensitive adhesive article, said method comprising:

   a) providing a substrate;
   b) coating at least a portion of said substrate with a polymerizable composition;
   c) providing an electron beam that is capable of producing pulses of accelerated electrons; and
   d) irradiating said polymerizable composition with said pulses of accelerated electrons to polymerize said composition so as to form a pressure-sensitive adhesive article, wherein said polymerizable composition is irradiated with said pulses of accelerated electrons during a residence time of 1.5 seconds to 5 seconds.

2.   The method of claim 1, wherein said polymerizable composition comprises at least one polymerizable monomer, at least one oligomer, or a blend thereof.

3.   The method of claim 2, wherein said at least one polymerizable monomer comprises a $C_{8-13}$ alkyl acrylate monomer.

4.   The method of claim 3, wherein said $C_{8-13}$ alkyl acrylate is selected from the group consisting of isooctyl acrylate, 2-ethylhexyl acrylate, lauryl acrylate and tridecyl acrylate.

5.   The method of claim 2, wherein said at least one polymerizable monomer is selected from the group consisting of methyl methacrylate, isobornyl acrylate, tripropyleneglycol diacrylate, pentaerythritol triacrylate, pentaeryritol tetraacrylate, hydantoin hexacrylate, and trimethylolpropylenetriacrylate.

6.   The method of any one of claims 1 to 5, wherein said polymerizable composition further comprises at least one comonomer.

7.   The method of claim 6, wherein said at least one comonomer is selected from the group consisting of acrylic acid, isobornyl acrylate, octylacrylamide and n-vinyl pyrrolidone.

8.   The method of any one of claims 1 to 7, wherein said polymerizable composition further comprises a crosslinking agent.

9.   The method of any one of claims 1 to 8, wherein said polymerizable composition further comprises a thickener.

10.   The method of any one of claims 1 to 9, wherein said polymerizable composition is irradiated with said pulses of accelerated electrons having a dose per pulse of up to 90 Gy.

11.   The method of any one of claims 1 to 10, wherein said polymerizable composition is irradiated with said pulses of accelerated electrons at a pulse rate of 500 to 3,000 pulses per second.

12.   The method of claim 11, wherein said polymerizable composition is irradiated with said pulses of accelerated electrons having a dose per pulse of 10 to 40 Gy.

**13.** The method of any one of claims 1 to 12, wherein said polymerizable composition is irradiated with said pulses of accelerated electrons at a temperature below 20°C for the first 40% to 70% of the time period that said polymerizable composition is irradiated.

**14.** The method of any one of claims 1 to 13, wherein said polymerizable composition is polymerized heterogeneously in a single phase.

**15.** The method of any one of claims 1 to 14, wherein said polymerizable composition is polymerized heterogeneously by irradiating said polymerizable composition with said pulses of accelerated electrons.

**16.** The method of any one of claims 1 to 15, wherein said polymerizable composition is irradiated with said pulses of accelerated electrons at a temperature below 20°C.

**17.** The method of any one of claims 1 to 16, wherein

- step d) comprises irradiating said polymerizable composition with said pulses of accelerated electrons to polymerize said polymerizable composition to less than full conversion;
- an electron beam is provided that is capable of producing a continuous beam of accelerated electrons; and
- the polymerizable composition produced in step d) is irradiated with said continuous beam of accelerated electrons to further polymerize the polymerizable composition.

**Patentansprüche**

**1.** Verfahren für das Polymerisieren eines Haftklebeartikels, wobei das Verfahren Folgendes umfasst:

a) Bereitstellen eines Substrats;
b) Beschichten mindestens eines Teils des Substrats mit einer polymerisierbaren Zusammensetzung;
c) Erzeugen eines Elektronenstrahls, der dazu fähig ist, Impulse beschleunigter Elektronen zu erzeugen; und
d) Bestrahlen der polymerisierbaren Zusammensetzung mit den Impulsen beschleunigter Elektronen, um die Zusammensetzung zu polymerisieren, um einen Haftklebeartikelzu bilden, wobei die polymerisierbare Zusammensetzung mit den Impulsen beschleunigter Elektronen während einer Aufenthaltszeit von 1,5 Sekunden bis 5 Sekunden bestrahlt wird.

**2.** Verfahren nach Anspruch 1, wobei die polymerisierbare Zusammensetzung mindestens ein polymerisierbares Monomer, mindestens ein Oligomer oder eine Mischung derselben umfasst.

**3.** Verfahren nach Anspruch 2, wobei das mindestens eine polymerisierbare Monomer ein $C_{8-13}$-Alkylacrylatmonomer umfasst.

**4.** Verfahren nach Anspruch 3, wobei das $C_{8-13}$-Alkylacrylat aus der Gruppe ausgewählt ist bestehend aus Isooctylacrylat, 2-Ethylhexylacrylat, Laurylacrylat und Tridecylacrylat.

**5.** Verfahren nach Anspruch 2, wobei das mindestens eine polymerisierbare Monomer aus der Gruppe ausgewählt ist bestehend aus Methylmethacrylat, Isobornylacrylat, Tripropylenglykoldiacrylat, Pentaerythrittriacrylat, Pentaerythrittetraacrylat, Hydantoinhexacrylat und Trimethylolpropylentriacrylat.

**6.** Verfahren nach einem der Ansprüche 1 bis 5, wobei die polymerisierbare Zusammensetzung ferner mindestens ein Comonomer umfasst.

**7.** Verfahren nach Anspruch 6, wobei das mindestens eine Comonomer aus der Gruppe ausgewählt ist bestehend aus Acrylsäure, Isobornylacrylat, Octylacrylamid und n-Vinylpyrrolidon.

**8.** Verfahren nach einem der Ansprüche 1 bis 7, wobei die polymerisierbare Zusammensetzung ferner ein Vernetzungsmittel umfasst.

**9.** Verfahren nach einem der Ansprüche 1 bis 8, wobei die polymerisierbare Zusammensetzung ferner ein Verdickungsmittel umfasst.

**10.** Verfahren nach einem der Ansprüche 1 bis 9, wobei die polymerisierbare Zusammensetzung mit den Impulsen beschleunigter Elektronen bestrahlt wird, die eine Dosis pro Impuls von bis zu 90 Gy aufweisen.

**11.** Verfahren nach einem der Ansprüche 1 bis 10, wobei die polymerisierbare Zusammensetzung mit den Impulsen beschleunigter Elektronen mit einer Impulsrate von 500 bis 3.000 Impulsen pro Sekunde bestrahlt wird.

**12.** Verfahren nach Anspruch 11, wobei die polymerisierbare Zusammensetzung mit den Impulsen beschleunigter Elektronen bestrahlt wird, die eine Dosis von 10 bis 40 Gy pro Impuls aufweisen.

**13.** Verfahren nach einem der Ansprüche 1 bis 12, wobei die polymerisierbare Zusammensetzung mit den Impulsen beschleunigter Elektronen bei einer Temperatur unter 20°C für die ersten 40% bis 70% der Zeitspanne bestrahlt wird, während der die polymerisierbare Zusammensetzung bestrahlt wird.

**14.** Verfahren nach einem der Ansprüche 1 bis 13, wobei die polymerisierbare Zusammensetzung in einer einzigen Phase heterogen polymerisiert wird.

**15.** Verfahren nach einem der Ansprüche 1 bis 14, wobei die polymerisierbare Zusammensetzung durch Bestrahlen der polymerisierbaren Zusammensetzung mit Impulsen beschleunigter Elektronen heterogen polymerisiert wird.

**16.** Verfahren nach einem der Ansprüche 1 bis 15, wobei die polymerisierbare Zusammensetzung mit den Impulsen beschleunigter Elektronen bei einer Temperatur unter 20°C bestrahlt wird.

**17.** Verfahren nach einem der Ansprüche 1 bis 16, wobei

- Schritt d) das Bestrahlen der polymerisierbaren Zusammensetzung mit den Impulsen beschleunigter Elektronen umfasst, um die polymerisierbare Zusammensetzung auf weniger als ihre vollständige Umwandlung zu polymerisieren;
- ein Elektronenstrahl erzeugt wird, der dazu fähig ist, einen kontinuierlichen Strahl beschleunigter Elektronen zu erzeugen; und
- die in Schritt d) erzeugte polymerisierbare Zusammensetzung mit dem kontinuierlichen Strahl beschleunigter Elektronen bestrahlt wird, um die polymerisierbare Zusammensetzung noch weiter zu polymerisieren.

**Revendications**

**1.** Procédé de polymérisation d'un article adhésif sensible à la pression, ledit procédé comprenant les étapes consistant à :

a) se procurer un substrat ;
b) revêtir au moins une partie dudit substrat d'une composition polymérisable ;
c) se procurer un faisceau d'électrons qui soit capable de produire des impulsions d'électrons accélérés ; et
d) irradier ladite composition polymérisable avec lesdites impulsions d'électrons accélérés pour polymériser ladite composition de manière à former un article adhésif sensible à la pression, dans lequel ladite composition polymérisable est irradiée avec lesdites impulsions d'électrons accélérés pendant un temps de séjour de 1,5 seconde à 5 secondes.

**2.** Procédé selon la revendication 1, dans lequel ladite composition polymérisable comprend au moins un monomère polymérisable, au moins un oligomère, ou un mélange de ceux-ci.

**3.** Procédé selon la revendication 2, dans lequel ledit au moins un monomère polymérisable comprend un monomère acrylate d'alkyle en $C_{8-13}$.

**4.** Procédé selon la revendication 3, dans lequel ledit acrylate d'alkyle en $C_{8-13}$ est choisi dans le groupe constitué par l'acrylate d'isooctyle, l'acrylate de 2-éthylhexyle, l'acrylate de lauryle et l'acrylate de tridécyle.

**5.** Procédé selon la revendication 2, dans lequel ledit au moins un monomère polymérisable est choisi dans le groupe constitué par le méthacrylate de méthyle, l'acrylate d'isobornyle, le diacrylate de tripropylèneglycol, le triacrylate de pentaérythritol, le tétraacrylate de pentaérythritol, l'hexacrylate d'hydantoïne et le triacrylate de triméthylolpropylène.

6. Procédé selon l'une quelconque des revendications 1 à 5, dans lequel ladite composition polymérisable comprend en outre au moins un comonomère.

7. Procédé selon la revendication 6, dans lequel ledit au moins un comonomère est choisi dans le groupe constitué par l'acide acrylique, l'acrylate d'isobornyle, l'octylacrylamide et la n-vinylpyrrolidone.

8. Procédé selon l'une quelconque des revendications 1 à 7, dans lequel ladite composition polymérisable comprend en outre un agent de réticulation.

9. Procédé selon l'une quelconque des revendications 1 à 8, dans lequel ladite composition polymérisable comprend en outre un épaississant.

10. Procédé selon l'une quelconque des revendications 1 à 9, dans lequel ladite composition polymérisable est irradiée avec lesdites impulsions d'électrons accélérés qui présentent une dose par impulsion allant jusqu'à 90 Gy.

11. Procédé selon l'une quelconque des revendications 1 à 10, dans lequel ladite composition polymérisable est irradiée avec lesdites impulsions d'électrons accélérés à une fréquence d'impulsions de 500 à 3 000 impulsions par seconde.

12. Procédé selon la revendication 11, dans lequel ladite composition polymérisable est irradiée avec lesdites impulsions d'électrons accélérés qui présentent une dose par impulsion de 10 à 40 Gy.

13. Procédé selon l'une quelconque des revendications 1 à 12, dans lequel ladite composition polymérisable est irradiée avec lesdites impulsions d'électrons accélérés à une température inférieure à 20°C pendant les premiers 40% à 70% de la durée pendant laquelle ladite composition polymérisable est irradiée.

14. Procédé selon l'une quelconque des revendications 1 à 13, dans lequel ladite composition polymérisable est polymérisée de façon hétérogène en une seule phase.

15. Procédé selon l'une quelconque des revendications 1 à 14, dans lequel ladite composition polymérisable est polymérisée de façon hétérogène par irradiation de ladite composition polymérisable avec lesdites impulsions d'électrons accélérés.

16. Procédé selon l'une quelconque des revendications 1 à 15, dans lequel ladite composition polymérisable est irradiée avec lesdites impulsions d'électrons accélérés à une température inférieure à 20°C.

17. Procédé selon l'une quelconque des revendications 1 à 16, dans lequel

- l'étape d) comprend le fait d'irradier ladite composition polymérisable avec lesdites impulsions d'électrons accélérés pour polymériser ladite composition polymérisable jusqu'à un taux de conversion inférieur au maximum ;
- on se procure un faisceau d'électrons qui est capable de produire un faisceau continu d'électrons accélérés ; et
- la composition polymérisable produite dans l'étape d) est irradiée avec ledit faisceau continu d'électrons accélérés pour polymériser davantage la composition polymérisable.

**FIG. 1**

Primary Radical
Propagating Radical
Monomer

FIG. 2

EP 1 385 889 B1

FIG. 3

EP 1 385 889 B1

**FIG. 4**

Legend:
- ▲ NSRC - 90 Gy/pulse
- ◍ NSRC - 71 Gy/pulse
- ■ NSRC - 50 Gy/pulse
- ◇ Pyxis - 50 Gy/pulse
- ● Pyxis - 30 Gy/pulse
- ○ NSRC - 27 Gy/pulse
- □ NSRC - 17 Gy/pulse

Axes: X-axis: Pulse Rate (pps); Y-axis: Conversion Dose (kGy)

EP 1 385 889 B1

FIG. 5

Dose Rate (kGy/sec)

Residence Time (sec)

⊞ Continuous (90/10)
☐ Continuous (88/12)
△ 483 Gy/pulse
● 387 Gy/pulse

■ 247 Gy/pulse
☉ 213 Gy/pulse
▲ 147 Gy/pulse
✳ 40 Gy/pulse

⊖ 27 Gy/pulse
△ 17 Gy/pulse
◉ 90 Gy/pulse
◆ 71 Gy/pulse
◇ 50 Gy/pulse

FIG. 6

**FIG. 7**

EP 1 385 889 B1